# EUROPEAN PATENT APPLICATION

(11) **EP 2 667 582 A1**
(43) Date of publication of application: **27.11.2013**
(21) Application number: 12290170.5
(22) Date of filing: 21.05.2012
(51) Int. Cl.: H04M 19/04, G06F 3/01

(54) **System and method for control of linear and rotary vibrators in an electronic device**

(71) Applicant: Motorola Mobility LLC, Libertyville, IL 60048 (US); ST-Ericsson SA, 1228 Genève Plan-les-Ouates (CH)
(72) Inventor: Schuster, Adrian M., West Olive, Michigan 49460 (US); Ballantyne, Wayne W., Coconut Creek Florida 33073 (US); Mottier, Matthew D., Lake Zurich Illinois 60047 (US); Pinna, Carlo, 20159 Milano (IT); Mecchia, Alessandro, 20059 Vimercate (IT); Binet, Vincent, 38000 Grenoble (FR)
(74) Representative: Openshaw, Paul Malcolm

(57) **Abstract**

A system and method for driving a vibrator in an electronic device, as well as electronic device employing such a system or method, are disclosed. In one example embodiment, the system for driving the vibrator includes an integrated circuit having one or more input terminals, one or more output terminals, a vibrator driver amplifier circuit, and one or more additional circuit components. The system further includes at least one processing portion for providing one or more input signals to the one or more of the input terminals. The system is configurable such that one or more control signals to be provided to the vibrator will include one or more first signals if the vibrator is a first vibrator device of a first type, and one or more second signals if the vibrator is a second vibrator device of a second type different from the first type.

## Description

### FIELD

The present invention relates to drivers for linear and rotary vibrators of electronic devices.

### BACKGROUND

Electronic devices such as smart phones and tablets have become popular and ubiquitous. Manufacturers of such devices are adding more and more features to these devices, and they are often equipped with powerful processors, significant memory, and open operating systems, which allow many developers to add different applications. Popular applications provide functions such as calling, emailing, texting, image acquisition, image display, music and video playback, location determination (e.g., GPS), and internet browsing functions, among others. Further, such devices often include various user input and output components for instructing operation of the devices and for perceiving information from the devices, respectively. For example, many electronic devices are equipped with linear and rotary vibrators, which provide functions such as ringer vibration and haptic feedback. Particularly, a rotary vibrator, such as a vibrator actuated by an eccentric rotary motor (ERM), is commonly used for ringer vibration, for providing haptic feedback, and/or for performing other functions. Also, a linear vibrator, such as a vibrator actuated by a linear resonant actuator (LRA), commonly provides for ringer vibration and/or haptic feedback, including haptic feedback for pressing a key on a keypad displayed on a touch screen.

Although each of ERMs and LRAs can perform a variety of functions, the two types of vibrators have different performance characteristics, which may or may not be desirable based on product requirements. Thus it is often the case that, when electronic devices of a given type are being manufactured, on some occasions it will be desirable to implement an ERM in the electronic device but on other occasions it will be desirable to include a LRA in the electronic device. That said, each type of vibrator usually requires its own driver circuit. Consequently, for electronic devices that can have either a rotary vibrator or a linear vibrator, it is typically required that two separate circuits be available to allow for implementation in each respective electronic device the particular type of vibrator that is desired for that electronic device. This can be expensive, can in some cases require redundant circuitry, and/or can limit the amount of space available for other components of an electronic device. The latter point is especially a concern for smart phones. In addition, the signals or waveforms required to drive the vibrators can be complicated to generate, and require complex software for that purpose. Often there is a need for different processors with different interfaces in order to generate the different types of signals or waveforms required to operate the different types of vibrators.

Thus, it would be desirable to provide electronic devices, and methods performed by electronic devices, that address one or more of these (and possibly other) issues associated with implementing vibrators of different types in electronic devices.

### SUMMARY

In at least one embodiment, the present disclosure relates to a system for driving a vibrator in an electronic device. The system includes an integrated circuit having one or more input terminals, one or more output terminals by which the integrated circuit is configured to be coupled to the vibrator, a vibrator driver amplifier circuit coupled at least indirectly to the one or more output terminals, and one or more additional circuit components coupled at least indirectly between the one or more input terminals and the vibrator driver circuit. The system further includes at least one processing portion for providing one or more input signals to the one or more of the input terminals of the integrated circuit. The integrated circuit is configured to provide one or more control signals via the one or more output terminals for receipt by the vibrator, based at least in part upon the one or more input signals. Also, the system is configurable such that the one or more control signals to be provided will include one or more first signals if the vibrator is a first vibrator device of a first type, and such that the one or more control signals to be provided include one or more second signals if the vibrator is a second vibrator device of a second type that is different from the first type.

In at least one additional embodiment, the present disclosure relates to an electronic device that includes a vibrator selected from the group consisting of a rotary vibrator and a linear vibrator, and a plurality of processing portions. The plurality of processing portions include an integrated circuit having one or more input terminals, one or more output terminals by which the integrated circuit is at least indirectly coupled to the vibrator, a vibrator driver amplifier circuit coupled at least indirectly to the one or more output terminals, and one or more additional circuit components coupled at least indirectly between the one or more input terminals and the vibrator driver amplifier circuit. Also, the plurality of processing portions additionally include at least one further processing portion for providing one or more input signals to the one or more of the input terminals of the integrated circuit. The plurality of processing portions and the integrated circuit are configurable so as to enable the integrated circuit to provide either a first set of control signals or a second set of control signals via the one or more output terminals for receipt by the vibrator, the first set of control signals being suitable for driving the vibrator if the vibrator is the rotary vibrator and the second set of control signals being suitable for driving the vibrator if the vibrator is the linear vibrator.

In at least one further embodiment, the present disclosure relates to a method of controlling operation of a vibrator in an electronic device. The method includes providing an integrated circuit within the electronic device that includes a vibrator driver amplifier circuit, and determining whether the vibrator is of a first type or of a second type. The method also includes receiving one or more input signals at the integrated circuit, providing one or more intermediate signals to the vibrator driver amplifier circuit, the one or more intermediate signals being based at least indirectly upon the one or more input signals, and amplifying the one or more intermediate signals by way of the vibrator driver amplifier circuit to produce one or more amplified signals. The method further includes outputting one or more control signals that either are respectively the one or more amplified signals or are based at least indirectly upon the one or more amplified signals, for receipt by the vibrator, whereby the controlling of the operation of the vibrator is achieved, and the controlling is particularly suited to reflect whether the vibrator is of the first type or the second type.

### BRIEF DESCRIPTION OF THE DRAWINGS

FIG. 1 is a front view of an example electronic device including a vibrator device (or vibrator) and a driver for the vibrator;

FIG. 2 is a block diagram showing in more detail example components of the example electronic device of FIG. 1;

FIGS. 3A and 3B respectively are two electrical schematic diagrams showing respectively two different example vibrator drivers of the example electronic device of FIG. 1, shown to be interconnected with other components of the electronic device of FIGS. 1 and 2, particularly including other processing components as well as the vibrator, which is shown as including alternatively either an eccentric rotary motor (ERM) vibrator or a linear resonant actuator (LRA) vibrator;

FIG. 4 is a flow diagram of an example method for operating the example vibrator driver of FIG. 3A;

FIG. 5 is a flow diagram of an example method for generating a chirp waveform utilizing the benefit of an example waveform state machine to operate the example vibrator driver of FIG. 3A;

FIG. 6 is a graph that shows an example acceleration versus excitation frequency profile for a LRA vibrator; and

FIGS. 7-10 illustrate various example signals (waveforms) that are received and/or generated by the vibrator driver of FIG. 3A.

### DETAILED DESCRIPTION

Disclosed herein are example vibrator drivers and methods performed at least in part by some of the vibrator drivers (and, in some cases, also by associated components), which in at least some embodiments address concerns associated with having a separate respective circuit for each type of vibrator found in an electronic device. In particular, in at least some embodiments, the vibrator drivers disclosed herein can each individually drive (without requiring another driver) two vibrators of two different types. For example, at least one of the vibrator drivers can individually drive either a rotary vibrator such as an eccentric rotary motor (ERM) vibrator or a linear vibrator such as a linear resonant actuator (LRA) vibrator, depending upon which type of vibrator happens to be implemented in the electronic device and coupled to the vibrator driver. Additionally, in at least some embodiments, a configurable logic block or logic state machine of some of the drivers can generate a pulse-width modulation (PWM) waveform suitable for exciting one of the vibrators instead of employing a separate signal processing component, such as a microprocessor, for the purpose of generating the PWM waveform. Also, in at least some embodiments, the use of such devices simplifies software requirements of a respective electronic device having one of the vibrator drivers. Further, in at least some embodiments, a simple on-off controller facilitates control of some of the vibrator drivers rather than requiring PWM waveforms to be inputted at inputs of the vibrator drivers.

In at least some embodiments, the input terminals and output terminals, respectively, of the vibrator drivers are digital inputs and digital outputs, respectively. Input signals received at the digital inputs particularly are able to logically map to respective programmable target voltages available from an array of target voltages at the vibrator drivers. In at least some such embodiments, the input terminals of the vibrator drivers are general purpose input/outputs (GPIOs), which allows the vibrator drivers to be compatible with other devices that employ GPIO(s), such as many other control devices, whether these devices are integrated circuits or other forms of electrical circuitry. Additionally, in some embodiments, the use of multiple GPIOs facilitates selecting different target voltages over time, which generates different wave patterns that a PWM converter converts to a PWM waveform. In at least some case, this allows for time varying PWM waveforms to be achieved.

Further, the use of multiple GPIO inputs also in at least some embodiments allows for an input multiplexer selector to choose one particular logic device or processor to actually drive the inputs for the vibrator driver (in other words, at one given time, the vibrator driver can base its operation upon signal(s) from one processing device but, at another given time, the vibrator driver can base its operation upon signal(s) from another processing device). This conversion and the selection of the target voltages can all occur within one of the vibrator drivers, which correspondingly simplifies the requirements of the respective electronic device in terms of the software needed and operated (e.g., by other processing device(s) of the electronic device) for the purpose of driving vibrators. Further with respect to simplifying software requirements, the vibrator drivers can use and/or include a timeout function that prevents an overvoltage or excess power condition at an output of one of the drivers.

In at least some embodiments or circumstances, the vibrator drivers are outputting programmable target differential voltages that various vibrators and features of such vibrators require for desired operation. Also, or alternatively, in at least some embodiments or circumstances, the various vibrators and their features are driven by various waveforms and sequences generated by selecting different target voltages over time. For example, the vibrator drivers can incorporate a state machine that can generate one of the various waveforms and sequences. The state machine does such by generating one or more voltage levels, where the state machine sustains each of the levels for a programmable duration of time. Furthermore, a state machine of one of the vibrator drivers facilitates generating a first higher amplitude waveform, followed by a final steady state waveform, and then a second higher amplitude waveform. This preceding pattern can enhance the tactile feedback of a respective vibrator. Additionally, a state machine of one of the vibrator drivers can generate a chirp waveform (which can be linear chirp waveform) commonly required by linear vibrators. Further, in some embodiments, other internal components of the vibrator drivers or respective electrical devices can generate desired waveforms. For example, a microprocessor can generate and control a digital waveform being inputted into one of the vibrator drivers.

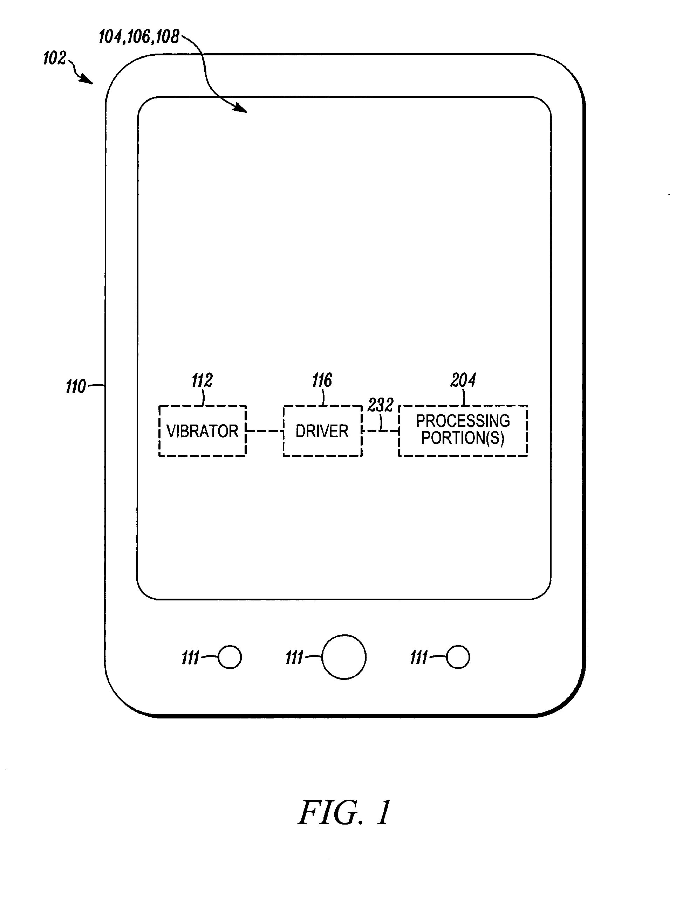

Referring particularly to FIG. 1, there is presented a front view of an example electronic device 102. The electronic device 102 in the present embodiment is a mobile device, such as a cellular telephone, smart phone, or personal digital assistant (PDA). Nevertheless, the electronic device 102 is intended to be representative of any of a variety of different mobile devices or other electronic devices, including but not limited to electronic devices such as a mobile (or cellular) phone, a personal digital assistant, a remote controller, an electronic book reader, a tablet computer device, a kiosk, a portable video game console, and/or devices that can perform functions such as calling, emailing, texting, image acquisition, internet browsing functions, gaming, as well as others.

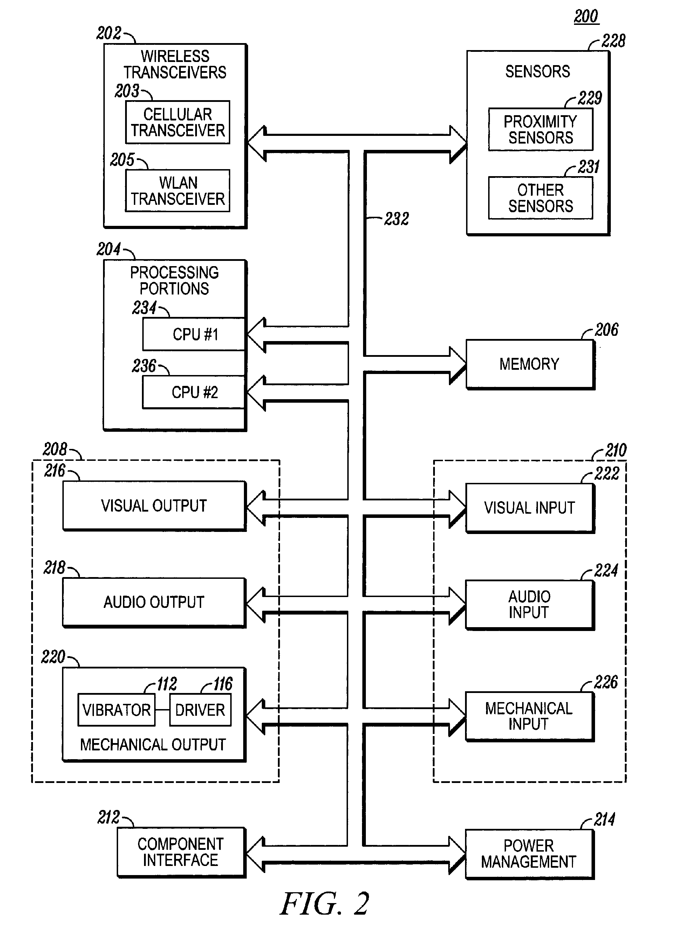

In the present embodiment, the electronic device 102 also includes a movement sensing assembly, which in FIG. 1 takes the form of a touch detecting surface 104 associated with a display screen 106 to form a touch screen 108, where the touch screen is housed with other components in a housing structure 110. The touch detecting surface 104 can employ any of a variety of known touch detecting technologies such as a resistive technology, a capacitive technology, or an optical technology. In the present embodiment, the touch detecting surface 104 includes a light permeable panel or other technology that overlaps the display screen 106 (which can be a liquid crystal display screen). Further as shown, the electronic device 102 additionally includes one or more (in this case, three) buttons 111 that can be actuated by a user. Notwithstanding the particular features shown as being present in the electronic device 102, as discussed in further detail below with respect to FIG. 2, in alternate embodiments the electronic device 102 can include additional movement sensing devices and/or input devices other than (or in addition to) the touch detecting surface 104 of the touch screen 108 and the buttons 111, and/or include additional output devices other than (or in addition to) the display screen 106 of the touch screen 108.

As discussed in further detail below, the electronic device 102 among other things also includes a vibrator device (or simply vibrator) 112, which depending upon the embodiment or implementation can take the form of, for example, either an ERM vibrator or a LRA vibrator. As shown, the vibrator 112 is mounted internally within the electronic device 102 (as represented by the vibrator being shown in phantom), and the vibrator 112 is particularly driven by a vibrator driver circuit (or simply driver) 116 that in turn is in communication (via one or more internal communication links 232) with one or more processing portions 204 as described in further detail with respect to FIG. 2. The vibrator 112 could, for example, be used to provide a telephone ringer function when the device 102 has its ringer configuration set to "Vibrate". In the present embodiment, it is envisioned that the vibrator driver 116 is particularly configured to drive, and capable of driving, the vibrator 112 regardless of the type of the vibrator, or at least regardless of whether the vibrator is a rotary or linear vibrator or more particularly regardless of whether the vibrator is an ERM vibrator or a LRA vibrator. That is, the vibrator driver 116 is generally operable so as to be suited for driving a variety of (or at least two) different types of vibrators. Thus, the vibrator driver 116 can be utilized and implemented in the electronic device 102 regardless of the form that the vibrator 112 takes, or at least regardless of whether the vibrator is a rotary or linear vibrator or more particularly regardless of whether the vibrator is a ERM vibrator or a LRA vibrator. In this sense, the vibrator driver 116 can be considered any of a universal, semi-universal, configurable, or generalized vibrator driver.

Although in the present embodiment the electronic device 102 includes only the single vibrator 112, in other embodiments it is possible that the electronic device 102 will include more than one vibrator, where the multiple vibrators can be several of the same type of vibrator (for example, several ERM vibrators or several LRA vibrators) or of several different types. For example, in some other embodiments the electronic device 102 will include both one of the ERM vibrators and one of the LRA vibrators. As described above, it is intended that the vibrator driver 116 will drive only one vibrator at a time. Thus, in such embodiments where multiple vibrators are present, it is further envisioned that multiple ones of the vibrator driver 116 would respectively be present and configured accordingly to drive the different respective vibrators.

Nevertheless, in other embodiments, it is alternatively possible that multiple vibrators of the same or different types could be driven by the same vibrator driver. In some such embodiments, such an arrangement can be achieved by connecting a selector, multiplexer, or multiplexer-type circuit (e.g., switches or relays and enable lines) between the vibrator driver and the various vibrator drivers, controlling the selector/multiplexer/multiplexer-type circuit so that at different respective times the different respective vibrator drivers are coupled to (in communication with) the vibrator driver (but such that multiple ones of the vibrators are not simultaneously coupled to the vibrator driver), and further operating the vibrator driver in an appropriate manner at the different respective times so that appropriate control signals are provided to the respective vibrators when the respective vibrators are coupled to (in communication with) the vibrator driver. Regardless of whether one vibrator driver or multiple vibrator drivers are employed in any given embodiment, the operation of such driver(s) can be controlled by the one or more processing portions 204 that are coupled to the driver(s).

Referring to FIG. 2, a block diagram 200 illustrates example internal components of the electronic device of FIG. 1. These components can include wireless transceivers 202, one or more (in this case, more than one) processing devices 204, memory 206, one or more output components 208, one or more input components 210, and one or more sensors 228. The devices can also include a component interface 212 to provide a direct connection to auxiliary components or accessories for additional or enhanced functionality, and a power management block 214, which is intended to represent power control and supply components such as a battery, linear voltage regulators, and switching power supplies, which can provide power to the other internal components shown in FIG. 2 by way of one or more power links (not shown). Additionally as shown, the various internal components of the electronic device 102 are directly (or at least indirectly) coupled to one another, so that the components can communicate with one another, by way of the one or more internal communication links 232, which can include (for example) internal serial and parallel busses.

More particularly with respect to the processing portions 204, depending upon the embodiment these can include one or more processing devices that each can take any of a variety of different forms (e.g., a microprocessor, microcomputer, application-specific integrated circuit, and/or the like). In the present embodiment, the one or more other processing devices or circuits particularly include a first digital processor (shown as a central processing unit or "CPU" #1) 234 and a second digital processor (shown in FIG. 2 as a CPU #2) 236, each of which can operate independently of the other and communicate independently with other components of the electronic device 102 (as represented in FIG. 2 by the two different arrows of the communication links 232 pointing to the two different processors).

As for the memory 206, this can encompass one or more memory devices of any of a variety of forms (e.g., read-only memory, random access memory, static random access memory, dynamic random access memory, non-volatile FLASH memory, etc.), and can be used by the processor 204 to store and retrieve data. It should be appreciated that (although not shown in FIG. 2), in some embodiments, there can be distinct memory portions of the memory 206 that are respectively associated with different respective ones of the processing portions when there are multiple processing portions as are shown in FIG. 2. Further, in some embodiments, one or more portions of the memory 206 can be respectively integrated with one or more of the processing portions 204 respectively in respective single integrated device(s) (e.g., in a processing device including memory or processor-in-memory (PIM)), albeit each such single device will still typically have distinct portions/sections that perform the different processing and memory functions and that can thus still be considered separate devices. The data that is stored by the memory 206 can include operating systems, applications, and informational data.

More particularly, each operating system includes executable code, also known as device drivers, that controls basic functions of the electronic device, such as interaction among the various internal components such as those encompassed by 208 and 210, communication with external devices via the wireless transceivers 202 and/or the component interface 212, and storage and retrieval of applications and data to and from the memory 206. Each application includes executable code that utilizes an operating system to provide more specific functionality for the communication devices, such as file system service and handling of protected and unprotected data stored in the memory 206. Although many such programs govern standard or required functionality of the electronic device 102, in many cases the programs include applications governing optional or specialized functionality, which can be provided in some cases by third party vendors unrelated to the electronic device manufacturer. Finally, with respect to informational data, an operating system or programs for performing functions of the electronic device 102 can reference and/or manipulate the non-executable code or information. Such informational data can include, for example, data that is preprogrammed upon the electronic devices 102 during manufacture, or any of a variety of types of information that is uploaded to, downloaded from, or otherwise accessed at servers or other devices with which the electronic device 102 are in communication during their ongoing operation.

With respect to each of operating systems, applications, and informational data, it should be appreciated that such data can arrive at the electronic device in any of a variety of manners. For example, embodiments encompassed herein can include computer program code containing instructions embodied in tangible media, such as floppy diskettes, CD-ROMs, hard drives, solid-state drives or any other computer-readable storage medium that are installed in, implemented in relation to, or in communication with the electronic device 102. Indeed, in addition to being preprogrammed (e.g., at a location at which the electronic device 102 is manufactured), or provided on memory device(s) of various types, program code can be loaded into the electronic device 102 (and subsequently executed) by way of transmission over some transmission medium, such as over electrical wiring or cabling, through fiber optics, or via electromagnetic radiation.

It should be appreciated, notwithstanding any particular description provided herein, developers can program the electronic device 102 such that the processing portions 204 and memory 206 interact with the other components of the electronic device to perform any of a variety of functions, including some of the methods described herein. Although not specifically shown in FIG. 2, the processing portions 204 can operate various modules (e.g., software modules) for performing the methods described herein as well. In at least some embodiments, she processing portions 204 (e.g., the digital processors 234 and 236) on their own or in combination with the vibrator driver 116 (or a module of, or implemented on, the vibrator driver), can execute computer program code and interact with one another, with the vibrator driver and/or with other components of the electronic device 102 to perform a variety of functions, including some of the methods described herein. When implemented on a general-purpose microprocessor (and/or, in alternate embodiments, on the vibrator driver), the computer program code segments can be considered as configuring the microprocessor (and/or the vibrator driver) to create specific logic waveforms. These waveforms could in fact alternately be generated by fixed function logic circuits, such as state machines.

Regarding the wireless transceivers 202, in the present embodiment these can include both a cellular transceiver 203 and a wireless local area network (WLAN) transceiver 205. Each of the wireless transceivers 202 utilizes a wireless technology for communication, such as cellular-based communication technologies including analog communications (using AMPS), digital communications (using CDMA, TDMA, GSM, iDEN, GPRS, EDGE, etc.), and next generation communications (using UMTS, WCDMA, LTE, IEEE 802.16, etc.) or variants thereof, or peer-to-peer or ad hoc communication technologies such as HomeRF, Bluetooth and IEEE 802.11 (a, b, g or n), or other wireless LAN communication technologies.

Example operation of the wireless transceivers 202 in conjunction with others of the internal components of the electronic device 102 can take a variety of forms and can include, for example, operation in which, upon reception of wireless signals, the internal components detect communication signals and the transceiver 202 demodulates the communication signals to recover incoming information, such as voice and/or data, transmitted by the wireless signals. After receiving the incoming information from the transceivers 202, the processing portions 204 (e.g., the first digital processor 234) format the incoming information for the one or more output components 208. Likewise, for transmission of wireless signals, the processing portions 204 format outgoing information, which may or may not be activated by the input components 210, and convey the outgoing information to one or more of the wireless transceivers 202 for modulation as communication signals. The wireless transceivers 202 convey the modulated signals to a remote device, such as a cell tower or an access point (not shown).

The output components 208 can include a variety of visual, audio, and/or mechanical outputs. For example, the output components 208 can include one or more visual output components 216 such as the display screen 106 of the touch screen 108. The one or more audio output components 218 can include a speaker, alarm, and/or buzzer; and the one or more mechanical output components 220 can include, among other things, the vibrator 112. As discussed above, the vibrator 112 can take a variety of forms including, for example, that of a rotary vibrator (e.g., an ERM vibrator) or a linear vibrator (e.g., a LRA vibrator), and the number and type(s) of vibrator(s) that are present can vary depending upon the embodiment. Further as shown, the output components 208 and particularly the mechanical output components 220 are further shown to specifically include the vibrator driver 116. As shown, it is the vibrator driver 116 that is particularly in communication with other internal components of the electronic device 102 such as the digital processors 234, 236 of the processing portions 204 via the communication link(s) 232, and the vibrator driver based at least in part upon such communications in turn controls operation of the vibrator 112.

The input components 210 can include one or more visual input components 222 such as an optical sensor of a camera, one or more audio input components 224 such as a microphone, and one or more mechanical input components 226 such as the touch detection surface 104 of the touch screen 108 and the buttons 111, as well as (in other embodiments) other device(s) such as a keyboard, keypad, mouse, and/or joystick. Actions that can actuate one or more of the input components 210 can include, in addition to simply applying pressure by way of a finger or a stylus to one or more of the input components, other actions, for example, powering on, opening, unlocking, moving, and/or operating the electronic device 102.

Lastly, the sensors 228 of the electronic device 102 can include both proximity sensors 229 and other sensors 231, such as an accelerometer, a gyroscope, or any other sensor that can provide pertinent information, such as to identify a current location or orientation of the device. Although the sensors 228 and input components 210 are described as encompassing particular specific devices in the present embodiment, it should be appreciated that, depending upon the circumstance or embodiment, input component(s) can be considered sensor(s) and vice-versa.

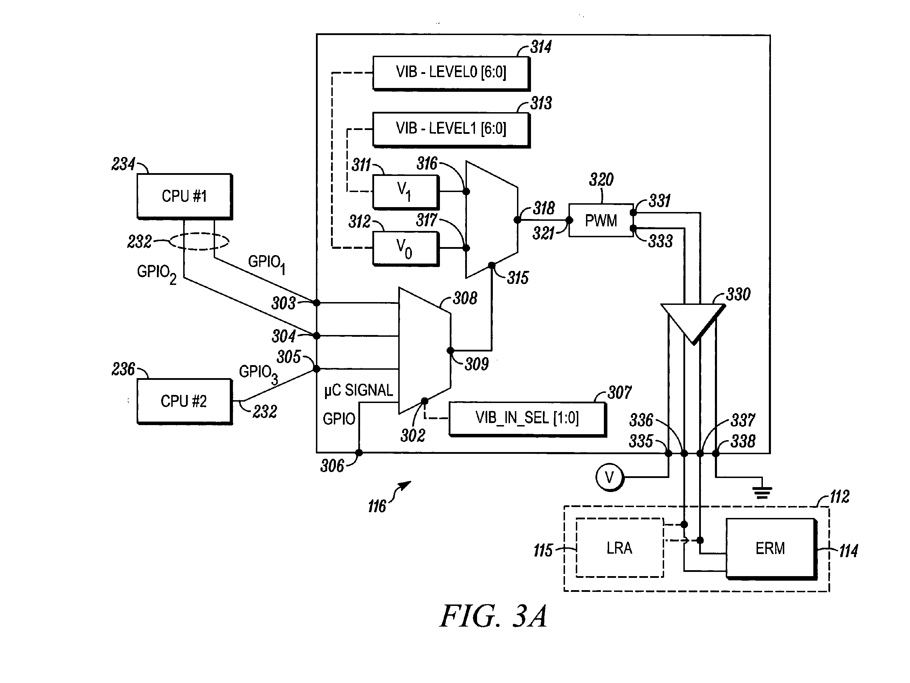

Turning to FIG. 3A, there is presented an electrical schematic diagram that depicts the vibrator driver 116 in more detail, in combination with the first and second digital processors 234 and 236 that also are among the processing portions 204, as well as with the vibrator 112. In the present example embodiment of FIG. 3A, the vibrator 112 particularly is shown to be a ERM vibrator 114. However, as additionally shown in dashed lines, the vibrator 112 can also be a LRA vibrator 115 in the alternative (that is, in the present example, if the LRA vibrator 115 is implemented as the vibrator 112, then the ERM vibrator 114 in that case would no longer be present). Thus, it should be appreciated from FIG. 3A that the vibrator driver 116, based at least in part upon appropriate communications with the first and/or second digital processors 234 and 236 (of the processing portions 204) is capable of operating to drive either of two different types of vibrators that can be the vibrator 112 in any given embodiment or implementation. That is, the vibrator driver 116 can be configured or controlled for operation so as to drive either of two different types of vibrators that constitute the vibrator 112 in any given embodiment or implementation.

As additionally shown in FIG. 3A, the vibrator driver 116 in the present embodiment is an integrated circuit that includes first and second multiplexers 308 and 310, respectively, a PWM converter 320, and an amplifier 330 (in the present embodiment, a Class D amplifier) capable of driving the vibrator 112 via circuit connections as shown. In the present embodiment, the vibrator driver 116 is particularly advantageous in that it is capable of governing (and configured to govern) operation of either of the ERM vibrator 114 or the LRA vibrator 115, depending upon which one is implemented as the vibrator 112, by way of a hardware circuit within the vibrator driver that is distinct from (and does not require) any microprocessor or software for that purpose. As already noted, in other embodiments the vibrator driver 116 (or variations thereof) can be implemented in electronic device(s) having other types of vibrators or combinations of vibrators including, for example, two different ERM vibrators, two different LRA vibrators, other types of rotary and/or linear vibrators, and/or more than two vibrators of one or more types. In some embodiments, it is possible that two or more vibrators will be coupled to a vibrator driver such as the vibrator driver 116 and be driven by the vibrator driver, particularly if a multiplexer or other selector circuit (not shown in FIG. 3A) is implemented between the various vibrators and the vibrator driver allowing for different ones of the vibrators to be driving at different times.

In the present embodiment of FIG. 3A, the vibrator driver 116 has first, second, third, and fourth input terminals 303, 304, 305, and 306, respectively, each of which as shown is a GPIO (and can be a pin, e.g., an input pin, of the integrated circuit constituting the vibrator driver 16) that is capable of receiving signals from various source devices such as the digital processors 234 and 236 (also, the source device terminals to which the inputs of the vibrator device are coupled can also be GPIOs). Although the input terminals 303, 304, 305, and 306 in the present embodiment are GPIOs, in other embodiments one or more of the input terminals can take other forms including, for example, the form of fixed digital/binary input terminals.

More particularly, in the present embodiment, an input signal waveform (or multiple waveforms) for the vibrator driver 116 is received by one or more of the first, second, and/or third input terminals 303, 304, and/or 305, respectively. In the present embodiment, the input signals can take the form of direct current (DC) signals and/or time-varying digital waveforms that at any given time are indicative of (or take on) either high (e.g., "1 ") or low (e.g., "0") values. Further in this regard, in the present embodiment, the first and second input terminals 303 and 304 are particularly coupled to, and receive input signals from, the first digital signal processor 234, while the third input terminal 305 is coupled to, and receives input signals from, the second digital signal processor 236. As for the fourth input terminal 306, in the present embodiment this terminal is capable of receiving a different microcontroller ("uC") signal input directly received from another microcontroller, which (although not shown) can actually be integrated on the same integrated circuit (IC) as the vibrator driver 116, and which can also be considered as being among the processing portions 204 of the electronic device 102.

Notwithstanding the particular arrangement shown in FIG. 3A, in other embodiments one or more other (or additional) device(s) or component(s) encompassed within the processing portions 204 can be coupled to one or more of the input terminals 303, 304, 305, 306 to provide input signals thereto. For example, in another embodiment, a single microprocessor can be coupled to all four of the input terminals 303, 304, 305, and 306, and provide all of the input signals to all of those input terminals. Indeed, depending upon the embodiment, the input terminals 303, 304, 305, and 306 can be connected to any digital (or even possibly analog) circuit or circuits (signal generators) suitable for generating and controlling a vibrator signal, and the digital waveform generators can include, further for example, a processor of a modem, an applications (or apps) processor, a touch screen controller, a haptic feedback controller, or any known microcontroller. Further, although as depicted in the present embodiment there are the four selectable input terminals 303, 304, 305, and 306, in other embodiments the vibrator driver 116 can have more or less than four selectable input terminals. That said, having four selectable input terminals as shown in the present embodiment improves the flexibility of the vibrator driver 116 without adding too much circuitry.

With respect to the multiplexer 308, in the present embodiment the multiplexer is a four-to-one (4:1) multiplexer having four input ports that are respectively coupled first, second, third, and fourth input terminals 303, 304, 305, and 306 (indeed, the input ports of the multiplexer and input terminals of the vibrator driver 116 can be considered one and the same structures). The multiplexer 308 additionally includes an output port 309 that communicates a selected one of the input signal waveforms communicated via a selected one (or more) of the input terminals 303, 304, 305, and 306. Selection among the input terminals 303, 304, 305, and 306 can (and typically will) vary over time during operation of the vibrator driver. That is, depending on the mode of the electronic device 102, the multiplexer 308 is configured so that specific ones of the input terminals are selected at respective given times. Selection among the signals provided at the input terminals 303, 304, 305, and 306 occurs in accordance with operation of a selector register 307 (shown in the present embodiment to be referred to as a "VIB_IN_SEL[1:0]" register) of the multiplexer 308, which in this embodiment is a serial peripheral interface (SPI) register. The selector register 307 is connected to, and provides selection signals to, a selector input port 302 of the multiplexer 308.

In the present embodiment, the first multiplexer 308 is configured to allow for selection of only one of the input terminals 303, 304, 305, 306 at any respective given time, where the selected one of the input terminals can change during different times (but also the selected input terminal can remain the same during successive time periods as well). That said, in alternate embodiments it is possible that the vibrator driver 116 can allow for selection of multiple input terminals at one time (and/or selection of a comparison between multiple input terminals, or a logical combination of input signals on these terminals), and thus the selection of one or more inputs can initiate or control the functionality of the vibrator driver 116. That is, although in some embodiments only one input terminal is selected at any given time by the first multiplexer 308, alternatively, any given number of input terminals (e.g., more than one of the input terminals 303, 304, 305, and 306) can be selected at any given time. Additionally, in some embodiments, initiation of the functionality of the vibrator driver 116 begins with the selector register 307 being set to a first binary number.

Still referring to FIG. 3A, the output port 309 the first multiplexer 308 is coupled to a selector input port 315 of the second multiplexer 310. In the present embodiment, the second multiplexer 310 is a two-to-one (2:1) multiplexer that allows for selecting between a first target voltage V and a second target voltage V0 respectively generated by first and second voltage generators 311 and 312, respectively. More particularly as shown, the first and second voltage generators 311 and 312 respectively are coupled to (so as to provide the first and second target voltages respectively to) respective first and second input ports 316 and 317 of the second multiplexer 310. The generators 311, 312 are generators at least in the sense that the devices output the first and second target voltages V1 and V0, but the exact functionality of the generators can vary depending upon the embodiment. For example, in some embodiments, with respect to the inputs 313 and 314, the generators are merely pass-through devices, and in some embodiments the generators serve to perform conversion functions, shifting, sign extensions, etc.

In the present embodiment, the output signal (or waveform) communicated from the output port 309 of the first multiplexer 308 to the selector input port 315 of the second multiplexer 310 can represent either a logic value of "0" or a logic value of "1" (low or high value, respectively) based upon the values provided at the selected one of the input terminals 303, 304, 305, and 306. When the output signal takes on the logic value of "0", this results in the selection of the first target voltage V0 by the second multiplexer 310, such that the target voltage V0 is then provided at an output port 318 of the second multiplexer. Alternatively, when that output signal received at the selector input port 315 takes on the logic value of "1", this results in the selection of the second target voltage V1 by the second multiplexer 310, such that the target voltage V1 is then provided at an output port 318 of the second multiplexer. It should further be appreciated that, although the waveform provided to the selector input port 315 takes on values of "0" or "1", the values V0 and V1 need not be values of "0" and "1" but rather can be set to any of a variety of discrete levels representative of a voltage to be output. More particularly, in the present embodiment, the first and second target voltages V0 and V1 respectively are programmable via respective first and second target voltage registers 313 and 314 (shown in the present embodiment as having "VIB_LEVEL0[6:0]" and "VIB_LEVEL1[6:0]" values, respectively), which again in the present embodiment are SPI registers. It should be noted that, although the various registers described herein are described in at least some cases as storing particular numbers of bits, these are only intended to be examples and can be varied depending upon the embodiment. For example, although the voltage registers 313 and 314 are shown as being 6-bit registers, in other embodiments these registers can be 8-bit registers or other types of registers.

Although not shown in FIG. 3A, it should be appreciated that each of the selector register 307 and the target voltage registers 313, 314 can be written to (or programmed or otherwise controlled) in a variety of manners depending upon the embodiment. For example, in some embodiments, one or more of these registers can be written to via an external serial peripheral interface (SPI) bus, or an I2C bus (or possibly some other bus), or also (or alternatively) one or more of these registers can be written to from an on-chip microcontroller (which can be, for example, the same microcontroller that provides signals to the fourth input terminal 306 and which as noted above can be considered to be encompassed among the processing portions 204). Indeed, signals for writing to any one or more of the selector register 307 and the target voltage registers 313, 314 can be provided via any of a variety of communication links including not only an SPI bus and/or a microcontroller (uC) peripheral bus or other communication link(s) with an on-chip microcontroller as mentioned above, but also (or instead) communication links such as an inter-IC (I2C) bus, a serial low-power inter-chip media bus (Slimbus), and/or other communication link(s). All of these possible communication links can generally be viewed as being encompassed within the communication links 232 of FIG. 2.

Further as shown in FIG. 3A, the output port 318 of the second multiplexer 310 is connected in turn to an input port 321 of the PWM converter 320, such that the output waveform or signal or digital input provided from the second multiplexer controls operation of the PWM converter. In response to such actuation, the PWM converter 320 generates and outputs first and second signals respectively at first and second output ports 331 and 333, respectively, which in turn are provided to corresponding input ports of the amplifier 330 (which again is a Class D amplifier). In the present embodiment, the PWM converter 320 generates a pair of pulse-width-modulated binary (or trinary) output signals that drive the inputs to the amplifier 330. In this regard, the difference between (e.g., the voltage difference between) the two output signals communicated from the output ports 331, 333 of the PWM converter 320 can be considered to constitute an overall output of the PWM converter.

More particularly, the overall output formed by the difference between the two output signals coming from the output ports 331, 333 of the PWM converter 320 is a discrete waveform having signals that are appropriate for causing the amplifier 330 to generate and output desired voltage signals at first and second output ports 336 and 337, respectively, of the amplifier 330, which are coupled to and used to drive the vibrator 112. The first and second output ports 336 and 337 respectively in the present embodiment are power amplifier output ports capable of supplying sufficient current to drive the vibrator (albeit the output ports can take other forms as well depending upon the embodiment). More particularly, given receipt of appropriate signals from the output ports 331, 333 of the PWM converter 320, the amplifier 330 generates at the output ports 336, 337 voltages varying between the supply rail voltages of the amplifier, such that the average value over time will be the first target voltage V1 and the second target voltage V0.

As already discussed above, in the present embodiment as indicated by solid lines, the vibrator 112 is particularly shown to be the ERM vibrator 114. However, also as already discussed, the vibrator driver 116 is configurable so that the vibrator driver can be not only configured and operated to drive the ERM vibrator 114, but also can be configured and operated to drive at least one other type of vibrator as well. Thus, in this example as illustrated by FIG. 3A in dashed lines, the ERM vibrator 114 can be substituted with the LRA vibrator 115 as the vibrator 112 and, if such substitution is made, the vibrator driver 116 would nevertheless be equally capable of driving operation of that LRA vibrator.

It should further be noted that the output signals provided via the output ports 336, 337 are amplified versions of the output signals provided at the output ports 331, 333, such that an overall output signal constituted by the difference (e.g., the voltage difference) between the signals at the output ports 336, 337 is an amplified version of the overall output signal constituted by the difference between the signals at the output ports 331, 333 of the PWM converter 320. As already noted, that in the present embodiment the amplifier 330 is controlled so that the average output signal from the amplifier provided at the output ports 336, 337 is the voltage V1 (at some times) and the voltage V0 (at other times). Also as shown, the amplifier 330 further includes additional input ports 335 and 338, which also are supply input terminals of the vibrator driver 116 by way of which the amplifier 330 (and thus the vibrator driver) are coupled to a power source V and to ground, respectively. The amplifier 330 is a hardware driver that generates amplified signals suitable for driving the vibrator 112, while the signals provided by the PWM converter 320 at the output ports 331, 333 (as well as the other signals communicated to or within the vibrator driver 116, other than with respect to the input ports 335 and 338) can be standard low-power signals such as, for example, complementary metal oxide semiconductor (CMOS) signals. Alternatively, the signal received at the input port 321 of the PWM converter 320 can be a low-power signal while the signals provided at the output ports 331, 333 of the PWM converter can be higher-power signals. Although in the present example embodiment, the PWM converter 320 provides the two differential output signals at the two output ports 331, 333, in other embodiments other circuit(s) can be employed including, for example, a single-ended amplifier with only a single output. Also, it should be appreciated that the particular values of the target voltages V1 and V0 (and particularly the first target voltage V1 relative to the second target voltage V0) can vary widely depending upon the embodiment. For example, in one embodiment, the first and second target voltages V1 and V0 respectively generated by the first and second voltage generators 311 and 312, respectively (which directly or indirectly correspond to register values from the target voltage registers 313, 314) can be two's complement numbers that are representative of the voltages and in steps of any of a variety of sizes (for example, steps of 91.81 mV), where the voltage numbers are independent of one another (in alternate embodiments, the register values can also be in other formats including, for example, a unipolar format, a binary coded decimal or BCD format, a one's complement format, etc.).

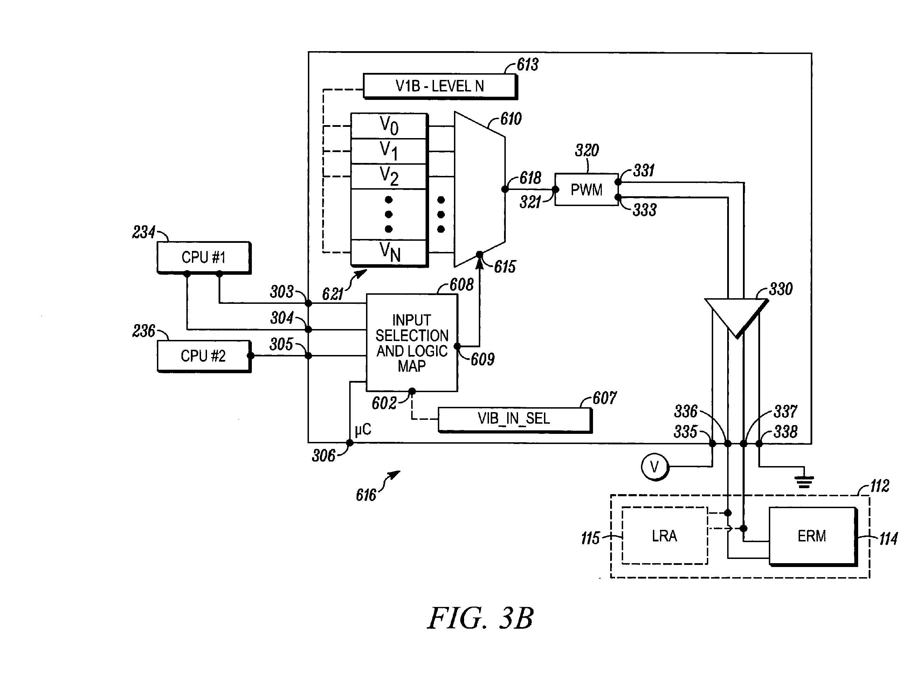

Notwithstanding the example embodiment provided in FIG. 3A, the present disclosure is intended to encompass numerous other embodiments and implementations of vibrator driver circuits, associated circuits/components, and/or electronic devices in which such vibrator driver circuits and/or associate circuits/ components are implemented. One additional example embodiment of an additional vibrator driver 616 is shown in FIG. 3B. As illustrated, the internal components and implementation of the vibrator driver 616 are identical to the vibrator driver 116 of FIG. 3A in a number of respects. In particular, the vibrator driver 616 is coupled to the first and second digital processors 234 and 236 (of the processing portions 204) by way of the first, second, and third input ports 303, 304, and 305, respectively, the vibrator driver 616 is coupled to the vibrator 112 by way of the first and second output ports 336 and 337, respectively (where the vibrator again is shown to be the ERM vibrator 114 with it being understood that the LRA vibrator 115 can just as well be substituted for the ERM vibrator), and the vibrator driver 616 further includes the fourth input port 306, input port 335, and input 338 by which the vibrator driver can be coupled to an additional microcontroller (not shown), the power source V, and ground, respectively. Further, as was also the case with respect to the vibrator driver 116 of FIG. 3A, the vibrator driver 616 of FIG. 3B provides the output signals to the first and second output ports 336 and 337 by way of the amplifier 330, which itself receives the output signals from the output ports 331, 333 of the PWM converter 320 in the same manner as was discussed above with respect to FIG. 3A.

Although similar in these respects, the vibrator driver 616 of FIG. 3B differs from the vibrator driver 116 of FIG. 3A in that the signal received by the PWM converter 320 is provided from a multiplexer 610 that, unlike the multiplexer 310 of FIG. 3A, is coupled to and capable of receiving signals from any of up to N+1 voltage generators 621 that respectively generate up to N+1 target voltages (accordingly, FIG. 3B particularly shows a plurality of voltage generators that respectively generate target voltages V0, V1, V2, ... up to target voltage VN). Such an arrangement particularly is suitable for generating a time-varying waveform based upon receipt of multiple input signals (e.g., at multiple input ports 303, 304, 305, and/or 306). As shown, each of the voltage generators 621 is coupled to a target voltage register 613 (which can for example be a SPI register with value(s) VIB_LEVELN) and based upon signal(s) from that target voltage register generate their respective target voltages.

Further as shown, selection operation of the multiplexer 610 is governed by signal(s) received at a selector input port 615 thereof, as provided form an output port 609 of an input selection and logic map 608. As shown, the input selection and logic map 608 of the vibrator driver 616 of FIG. 3B is a component that takes the place of the multiplexer 308 of the vibrator driver 116 of FIG. 3A. In this regard, the input terminals of the input and selection logic map constitute the first, second, third, and fourth input ports 303, 304, 305, and 306, respectively, of the vibrator driver 616. Further, operation of the input selection and logic map 608 of the vibrator driver 616 of FIG. 3B is governed by signal(s) received at a selector input port 602 thereof, as provided from a selector register 607 that takes the place of the selector register 307 of FIG. 3A. As an example, with N+1=4, and thus four voltages V0, V1, V2, and V3 to be selected, selector register 607 can select a pair of inputs, such as 303 and 304, and the logical encoding represented by this pair of signals (00, 01, 10, or 11) can select one of voltages V0, V1, V2, and V3 to be applied to 610 and 321. As discussed above in relation to the target voltage registers 311, 312 and selector register 307, the target voltage register 613 and selector register 607 can be set or controlled based upon signals from other source(s). It should be appreciated that, although the embodiments of FIGS. 3A and 3B particularly show four GPIO inputs 303, 304, 305, and 306, in other embodiments a lesser number or greater number of inputs can be provided.

In addition to the embodiments discussed above, the present disclosure is intended to encompass further embodiments as well. For example, while the amplifier 330 (output amplifier) in the present example is a Class D amplifier, it can also in some embodiments be any of a variety of other types of amplifiers that are switch-mode amplifiers or even other types of amplifiers. Also, in some embodiments, other components can be employed instead of the PWM converter 320 including for example other signal converters including for example other discrete-level converters in which one or more target voltage input signals (e.g., target voltages such as V0 and V1 discussed above) are input and converted into signals suitable for driving directly or indirectly (e.g., via an amplifier such as the amplifier 330) a vibrator such as the ERM or LRA vibrators. In at least some circumstances, particular selections of amplifiers are complementary to particularly selections of signal converters. For example, a voltage digital-to-analog converter (DAC) can be employed as a signal converter (e.g., in place of the PWM converter 320) in combination with a linear amplifier (as the output amplifier corresponding to the amplifier 330) or, also for example, a DAC can be employed as a signal converter in combination with a class AB amplifier employed as the amplifier.

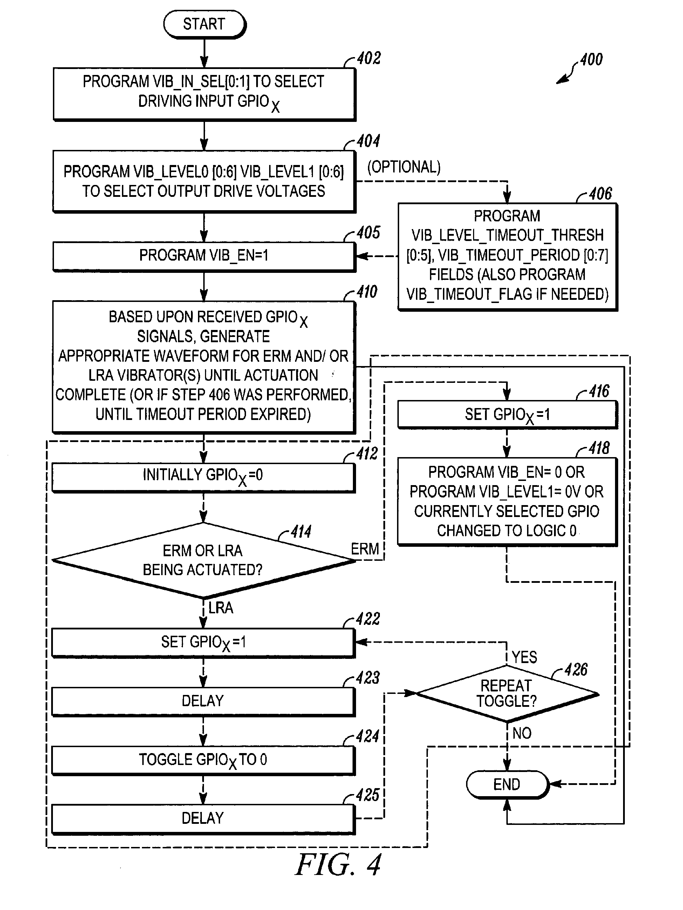

Turning to FIG. 4, a flow chart 400 is provided showing example operation of the vibrator driver 116 and associated circuitry shown in FIGS. 1-3A, by which the vibrator 112 can be driven, both in the case where the vibrator is the ERM vibrator 114 as well as in the case where the vibrator 112 is the LRA vibrator 115. The flow chart 400 among other things shows steps of operation in which various settings of SPI values (or bits) within various registers of the vibrator driver 116 are set and modified over time so as to enable various types of actuation of the ERM vibrator 114 or LRA vibrator 115. Proper control of the operation of the vibrator 112 by the vibrator device 116, so as to achieve proper control regardless of whether the vibrator is the ERM vibrator 114 or the LRA vibrator 115 depending upon the embodiment, is achieved by the setting of appropriate values for V0, V1, and the waveforms fed to the selected GPIO or GPIOs (that is, the waveforms provided to that one or more of the input ports 303, 304, and 305 that are selected by operation of the multiplexer 308). Although the particular settings (and number and types of values that are set) can vary depending upon the embodiment or circumstance, in the present embodiment that is the subject of FIG. 4, the following variables having the characteristics shown in Table 1 are set and/or modified as described further in relation to the description of the flow chart 400.

**Table I -- Vibrator Driver SPI Control**

| Variable Name | # of Bits | Description |
|---|---|---|
| VIB_EN | 1 | Logic 1 Enables the Vibrator Driver |
| VIB_IN_SEL | 2 | Selects the input waveform pin. |
| | | 00 - GPIO1 selected |
| | | 01 - GPIO2 selected |
| | | 10 - GPIO3 selected |
| | | 11 - internal uC signal selected |
| VIB_LEVELO | 7 | Sets the output target voltage, V0 2's complement number in 91.81mV steps. |
| VIB_LEVEL1 | 7 | Sets the output target voltage, V1 2's complement number in 91.81mV steps. |
| VIB_TIMEOUT_THRESH | 6 | Sets the threshold voltage at which the timeout counter is triggered. Unsigned number in 91.81mV steps. |
| VIB TIMEOUT PERIOD | 8 | Sets the maximum time period of the output PWM waveform above the timeout threshold voltage. Unsigned number in 2 ms steps. |
| VIB_TIMEOUT_FLAG | 1 | Logic 1 indicates a timeout condition has been reached. |

As shown, upon starting, the method 400 begins at a step 402 at which the selector register 307 is programmed (more particularly, the values of the VIB_IN_SEL[1:0] SPI bits are set) to output a selector signal to the selector input port 302 that selects one of the first, second, third, and fourth input terminals 303, 304, 305, and 306 of the vibrator driver 116 to be the source of the input signal that will govern further operation of the vibrator driver. More particularly, this selection determines which of the signals provided to the input terminals 303, 304, 305, and 306 will be accepted by the first multiplexer 308 and used as the output at the output port 309 of the first multiplexer. The step 402 shows that the driving input "GPIOx" is selected, which is intended to indicate that any of the first input terminal 303 ("GPIOI"), second input terminal 304 ("GPIO2") third input terminal 305 ("GPIO3") or fourth input terminal 306 ("GPI04") can be selected in this regard (in this example, by specifying the values of 00, 01, 10, or 11 as indicated in Table 1). For purposes of the present example, it can be assumed that the first input terminal 303 is selected in one circumstance.

Next, at a step 404, additionally the target voltage registers 313 and 314 are respectively programmed (more particularly, the VIB_IN_SEL1[0:6] and VIB_IN_SEL0[0:6] SPI bits of those respective registers are set). The programming of the first and second voltage target registers 313 and 314 respectively determines the voltages V1 and V0 that are input at the respective input ports 316 and 317 of the second multiplexer 310 by the first and second voltage generators 311 and 312, respectively, which ultimately determines the particular voltages output at the output terminals 336 and 337 (or the voltage difference between those output terminals) of the amplifier 330 and provided to the vibrator 112. The programming of the first target voltage register 313 particularly is performed so as to produce the desired average differential voltage when operating in ERM mode and so as to produce the desired short term average voltage when operating LRA mode, across the output terminals 336 and 337. The programming of the second target voltage register 314 particularly is performed so as to produce zero (0) volts when operating in ERM mode and so as to produce a voltage that is the negative of the first target voltage when operating in LRA mode, across the output terminals 336 and 337. With these settings, the PWM converter 320 operating as a PWM waveform driver will generate an average differential voltage across the output terminals 336 and 337 equal to the value programmed in the first target voltage register 313 (that is, the value specified as VIB_LEVEL1[6:0], which is V1). Although the exact waveform will also contain PWM frequency components (e.g., in the 50-200 kHz range) depending upon the PWM frequency that is used, these do not perturb the behavior of the vibrator 112 (regardless of whether the vibrator is the ERM vibrator 114 or the LRA vibrator 115) when being driven.

Following, the step 404, the method either proceeds directly to a step 405 or, alternatively (optionally, depending upon the embodiment), performs a timeout step 406 before then proceeding on to the step 405. For convenience, discussion of the timeout step 406 is deferred to a later portion of this disclosure below. With respect to the step 405, at this step a further register value (VIB_EN) is set that determines whether the vibrator functionality is to be effected, that is, whether there is (or will be) present a vibrator such as the vibrator 112 to be driven by the output of the amplifier 330. That is, to enable the entire vibrator driver function, the SPI bit VIB_EN must be set to one (1) (assuming it was initially zero (0)), and this is true regardless of the type of vibrator driver that is being implemented (for example, this is true regardless of whether the ERM vibrator 114 or the LRA vibrator 115 is being implemented).

Following the step 405, at a step 410 the method 400 then proceeds by generating an appropriate signal (or waveform) for the selected ERM vibrator 112 or LRA vibrator 114. This generating is performed by the components of the vibrator driver 116 (e.g., by the first and second multiplexers 308 and 310, the PWM converter 320, and the amplifier 330) based upon the input signals received at the input port(s) selected by the selector register 307 in accordance with the programming performed at the step 402, and in accordance with the V1 and V0 values provided by the generators 311 and 312 in accordance with the values of the registers 313, 314 set at the step 404. For example, if (as previously assumed) the selector register 307 is set, at the step 402, to specify that the first multiplexer 308 should select the signals received at the first input port 303 ("GPIO1") as provided by the first digital processor 234 as its selected input, then those signals will govern the output signal communicated from the output port 309 to the selector input port 315 of the second multiplexer 310. Consequently, the PWM converter 320 will generate output signals at the output ports 331, 333 based upon the V1 and V0 values provided by the generators 311, 312, in accordance with the settings of the registers 313, 314 established at the step 404, as controlled by the output signal received at the selector input port 315. The output signals of the PWM converter 320 directly control the output signals provided to the vibrator 112 (in this case, the ERM vibrator 114 or LRA vibrator 115 depending upon which has been implemented) via the output ports 336, 337.

It should be appreciated that the exact signals output by the vibrator driver 116 and received by the vibrator 112 are determined based upon one or more of the processing portions 204 other than the vibrator driver itself. Thus, the performing of the step 410 by the vibrator driver 116 is accompanied by various steps (or substeps) 412-426 that are performed by those other processing portions, such as the first or second digital processors 234, 236. Although all of the steps 402-410 described above can be considered as steps or substeps performed by the vibrator driver 116 itself, the steps 412-426 are performed by one or more of the processing portions 204 and not the vibrator driver (again, for example, the first or second digital processors 234, 236).

More particularly, in the present embodiment, operation of the vibrator driver 116 related to the generating of the waveform (signals) for the vibrator 112 begins with the input signal received at the selected input terminal (e.g., the first input terminal 303 or "GPIO1") being set at zero by the processing portion providing that input signal (e.g., the first digital processor 234). Consistent with such a setting, the vibrator 112 (regardless of whether it is the ERM vibrator 114 or LRA vibrator 115 that is present) is not being actuated at that time. Subsequently, the operation varies depending upon whether it is the ERM vibrator 114 that is the vibrator 112 that is present and being actuated or the LRA vibrator 115 that is present and being actuated, as represented by a step 414. If it is the ERM vibrator 114 that is present and being actuated, then the process advances from the step 414 to a step 416, at which point the value of GPIOx is changed from a value of "0" to "1" (in this example, assuming that the first input terminal 303 or "GPIO1" was specified by the selector register 307, then GPIO1 is changed from "0" to "1"). Upon the completion of the step 416, the vibrator driver 116 generates the output signals at the output terminals 336, 337 so as to control operation of the ERM vibrator 114 based upon the particular signals received at the selected input terminal (again, in this case, the first input terminal 303 or "GPIO1"). Typically, this would result in the ERM being presented with a constant DC voltage (time averaged), e.g., +2.0V, for several 10s or 100s of msec. Finally, when the governing controller (e.g., the first digital processor 234) or associated governing software that is providing the input signals to the selected input terminal (in this example, GPIO1) determines that the duration of vibration of the ERM vibrator 114 has been met, then the process finishes at the step 418, at which the value of the further register (VIB_EN) previously set at the step 405 is reset from "1" (high) to "0" (low) or, in a second alternative, the GPIO input currently selected by the multiplexer 308 and provided to the multiplexer 310 (or selected by the input selection and logic map 608 and provided to the multiplexer 610) is changed to a logic 0, or, in a third alternative, a value of the register 313 (VIB_LEVEL1) set previously at the step 404 is reset so as to equal a value representing zero (0) volts. Any of these changes can be made at the direction of the governing controller (e.g., the first digital processor 234) or associated governing software and, upon any of these changes being made, the actuation of the ERM vibrator 114 stops. As an alternate stopping mechanism for the ERM, a negative DC voltage can be presented across the ERM terminals for a short period of time such as tens of msecs, to provide a quicker stop of the ERM vibrator. This negative voltage can be generated by programming the register 314 to a value representing a negative voltage, then having the digital level at the selector input port 315 changed to 0. After this negative voltage is applied, then step 418 can be performed.

Alternatively, if it is the LRA vibrator 115 that is being actuated, then the process advances from the step 414 to a step 422, at which the governing controller (e.g., the first digital processor 234) changes the value of the input signal provided to the selected input terminal (e.g., the first input terminal 303 or "GPIO1") from "0" to "1". The changing of this value causes a positive amplitude waveform portion to be generated an output by the amplifier 330 of the vibrator driver 116 at the output terminals 336, 337. The step 422 is followed by a step 423 at which a variable time delay of a known duration occurs. Then, at the step 424, upon the governing controller that the duration of the positive amplitude waveform portion has been sufficiently long, the governing controller again toggles the value of the input signal provided to the selected input terminal (again, in this example, GPIO1) back to the zero value. This results in a negative amplitude waveform portion begin generated at the output terminals 336, 337 of the vibrator driver 116, which is a waveform portion that is the negative of the waveform portion applied during the step 422. Following performance of the step 424, at a step 425 an additional variable time delay of a known duration occurs. The time delays of the steps 423 and 425 can potentially be, but need not be, the same, and can each be varied depending upon the embodiment or operational circumstance.

Following the time delay of the step 425, at the next step 426, the governing controller then determines whether the toggling action should be repeated. For as long as this is determined to be desirable, the governing controller then continues to execute the steps 422 and 424, at a rate that emulates a variable frequency square wave swept over a frequency range specified for the LRA vibrator 114 (e.g., by a vendor thereof). For example, the waveform can be swept from 165 to 185 Hz during a 200 millisecond interval. Also, the sweep can be repeated if the vibration is to last longer. However, when the governing controller (again, e.g., the first digital processor 234) determines that operation of the LRA vibrator 114 should cease, the process stops re-executing the steps 422 and 424 and instead ends following the last performing of the step 426.

As already noted, in at least some embodiments the method of the flow chart 400 not only includes the steps already described but also includes the optional step 406, which is performed subsequent to the step 404 and prior to the step 405 (further, in alternate embodiments, the step 406 can be performed prior to the step 404 or prior to the step 402). In this regard, in addition to the previously-described registers of the vibrator driver 116, in some embodiments one or more additional registers shown in Table 1 can assist in controlling the duration of driving the vibrator driver 112 (regardless of whether it is the ERM vibrator 114 or the LRA vibrator 115 that is implemented) by timing out the vibrator driver 116. Use of these registers, by way of the step 406, can be particularly advantageous where a running application, or the operating system, inadvertently locks up the electronic device 102 at a time when at least one of the vibrator 112 is running, such that the low level vibrator driver code running in 204 fails to terminate the vibrator driving waveform, as would normally occur. In the absence of timing-out functionality, such a lock-up occurrence (or possibly some other malfunction of the electronic device 102 in terms of controlling the vibrators or otherwise) can cause the vibrator 112 to operate for an excessive duration of time, which can be disadvantageous for a variety of reasons, including the possibility of physically damaging or overheating the vibrator. By contrast, if such timing-out functionality is present and activated, such an excessive duration of operation of the vibrators and corresponding disadvantages can be avoided or minimized.

As shown in FIG. 4, the step 406 of the flow chart 400 particularly involves programming of one or more additional registers of the vibrator driver 116 (which are not shown in FIG. 3). More particularly, in the present embodiment, the registers that assist in controlling the duration of driving the vibrator 112 (regardless of whether it is the ERM vibrator 114 or the LRA vibrator 115) include one or more registers that store a VIB_TIMEOUT_PERIOD value and a VIB_TIMEOUT_THRESH value, both of which are shown in Table 1. In the present embodiment, the VIB _TIMEOUT_PERIOD value is a binary value that is programmed to a signal duration register (which can be, for example, a SPI register, an 12C register, a microcontroller register, or take other forms), and that can represent the maximum duration of time to output the PWM waveform above a particular voltage (such as a threshold voltage). In one particular implementation of this embodiment, it is advantageous to configure the timeout function to set the signal duration register to an unsigned value in two-millisecond steps.

By appropriately setting the VIB _TIMEOUT_PERIOD value, the vibrator driver 116 is able to perform a programmable timeout function that can halt the vibrator driver operation (and thus halt ongoing operation and movement of the vibrator 112, regardless of whether it is the ERM vibrator 114 or the LRA vibrator 115) even if any or more of the input terminals 303-306 continue to receive input signal(s) that otherwise would continue to cause actuation of the vibrator(s). More particularly, as also shown in FIG. 4, if the optional step 406 is performed, the vibrator driver 116 when performing the step 410 only continues to generate appropriate waveform(s) to actuate the ERM vibrator 114 or LRA vibrator 115 until a timeout period represented by the VIB_TIMEOUT_PERIOD value has expired (if the actuation is not completed prior to the expiration of the timeout period). Additionally, in some embodiments, it should be appreciated that the timeout function can halt the vibrator driver 116 even when it is continually running without receiving input signal(s) at the input terminals 303-306 from a signal generator that would otherwise be commanding vibrator actuation. In at least some circumstances, a VIB_TIMEOUT_FLAG value is set in another register (also shown in Table 1) when a timeout condition has occurred (for example, the SPI bit of this register can be set to a "1" value), in order to provide an interrupt for digital processors 234, 236. This can be performed, for example, to notify a user or the electronic device 102, or digital processors 234, 236, that there may be a malfunction, or that the programmed vibrator waveform has successfully completed.

Although not required in all embodiments, in the present embodiment of FIG. 4, at the step 406 a VIB_TIMEOUT_THRESH value is also stored in a threshold voltage register (not shown in FIG. 3), which indicates a specific voltage that can trigger the timeout function. More particularly, in one implementation, this threshold value can be set as an unsigned voltage in 91.81 mV steps. Operation taking into account such a threshold value can proceed in various manners. For example, if the threshold voltage register is programmed to a value less than the positive polarity step of 500 mV (e.g., to 400 mV), then if a signal generator (e.g., the first digital processor 234) communicates a signal to the first input terminal 303 to enable a 300-millisecond linear vibrator event using a one (1) Volt peak-to-peak amplitude driver waveform, the respective timeout period will be determined by the vibrator driver 116 as commencing at the beginning of the positive pulse. Assuming further that the timeout period value (VIB_TIMEOUT_PERIOD) stored in the signal duration register is set to a binary value representing 510 milliseconds (e.g., where the step size is 2 milliseconds per bit in unsigned format) then, if the signal generator did not reduce the positive amplitude waveform below 400 mV after 510 milliseconds, the timeout will be triggered at 510 milliseconds after the occurrence of the beginning of the positive pulse.

Although FIG. 4 particularly shows a process to be performed by an electronic device including the vibrator driver 116 of FIG. 3A, a substantially similar process can be performed by an electronic device having the vibrator device 616 of FIG. 3B. Further, it should be appreciated that the particular steps in FIG. 4 and discussed above can vary considerably depending upon the embodiment or operational circumstances. For example, although the above example supposes that it is the first input terminal 303 ("GPIO1") that is specified by the selector register 307 as the source of input signals for the vibrator driver 116, in other embodiments any of the second input terminal 304 ("GPIO2"), the third input terminal 305 ("GPIO3") and/or the fourth input terminal 306 (the microcontroller or "uC" terminal) can be specified as the source of input terminals by appropriately setting the VIB_lN_SEL bit field (e.g., by setting the field to 01, 10, or 11, rather than to 00 for the GPIO1 setting). Regardless of which input terminal is designated as the source of input signals for the vibrator driver 116, otherwise operation of the vibrator driver can proceed in the same or substantially the same manner as discussed above (except insofar as the sources of the input signals will have changed). Additionally, notwithstanding the particular ordering of the steps of the flow chart 400, the order of the steps of the method can be modified from that shown, and still achieve the driving of the ERM vibrator 112 and LRA vibrator 114. That is, although the steps of the method 400 imply a particular order, the steps can be rearranged logically in at least some other embodiments (e.g., the step 405 can occur prior to the step 402 or can occur after the step 416 at which GPIOx is set to "1").

Further, it should be appreciated that, depending upon the embodiment or circumstance, one or more of the steps of the flow chart 400 can be performed repeatedly. For example, the values of the programmable target voltages set at the step 404 can be repeatedly selected or modified over time so as to select or modify the waveforms output by the vibrator driver. Thus, driving the vibrator(s) with multiple waveforms and/or sequences can simply be achieved through selecting/reselecting the desired target voltages over time. Also, the process can be modified in other manners. For example, in an alternate embodiment, to achieve actuation of the ERM vibrator 115, the selected input terminal (e.g., the first input terminal 303 or "GPIO1") can start with a value of one (1) and then, to kick off the waveform, the value of VIB_EN can then at that time be set to one (1) (assuming it was initially 0). Both in such embodiments, as well as in the embodiment already discussed above with respect to FIG. 4, the true starting point of waveform generation typically includes (albeit does not absolutely require in all embodiments) the condition VIB_EN=0.

In addition to the functionality described above, a variety of other embodiments and implementations are also possible. For example, some further embodiments of the vibrator driver 116 can perform a method to quick start the LRA vibrator 115 (or possibly other linear vibrators). This method includes producing a high amplitude waveform for a particular duration (e.g., 3 Volts peak-to-peak for 10 to 20 milliseconds), and then reverting to a normal steady state waveform (this is particularly acceptable if a high amplitude portion does not exceed a certain length of time, e.g., in microseconds, as specified by the LRA vendor). An integrated circuit can implement this functionality, which can allow for removing registers related to the timeout function. In at least some embodiments, such functionality can be partly or fully automated. Additionally, some embodiments of the vibrator driver 116 can include features for controlling a chirp waveform, commonly required to activate an LRA vibrator. This chirp waveform can be software or hardware-controlled.

Also, although the example processes are particularly directed toward embodiments of the electronic device 102 in which the vibrator driver 116 is configured to drive a single vibrator constituting the vibrator 112 that happens to be implemented on the electronic device, which has been selected from a variety of different possible selectable options of vibrator such as the ERM vibrator 114 or LRA vibrator 115 particularly discussed above, still additional processes or modified versions of the above-described processes can be performed when the electronic device 102 includes more than one vibrator that are to be driven by the same vibrator driver. For example, in one embodiment in which there is both the ERM vibrator 114 and the LRA vibrator 115 present in the same electronic device, and the two vibrators are coupled to the vibrator driver 116 by way of a multiplexer-type circuit as discussed above, the step 414 at which it is determined whether the ERM vibrator or LRA vibrator is being actuated includes a selection substep in which the multiplexer-type circuit is controlled to couple either the ERM vibrator or the LRA vibrator to the vibrator driver 116.

It should also be appreciated that the process of FIG. 4 can be expanded to include one or more additional steps that are manufacturing, assembly, configuration, and/or implementation steps that relate to the configuration of the electronic device 102 so that it includes particular vibrator(s) and so that the vibrator device 116, processing portions 204, memory 206, and/or other portions or components of the electronic device are configured so as to permit or facilitate controlling of the vibrator(s) that are implemented on the device. In some embodiments, such additional steps can occur, for example, prior to the step 402. Further for example, in one such embodiment, such additional steps (not shown) can include a first preliminary step at which it is determined whether the ERM vibrator 114 or the LRA vibrator 115 is to be implemented in the electronic device 102 as the vibrator 112. Then, at a second preliminary step, that one of the ERM vibrator 114 or the LRA vibrator 115 which was determined at the previous step is placed in/on the electronic device 102 as the vibrator 112.

Additionally, at a third preliminary step, the memory 206 is programmed with one or more software programs that can be ultimately performed on the processing portions 204 and that are particularly suited for causing the processing portions 204 to provide appropriate signals to the vibrator driver 116 for controlling operation of that one of the ERM vibrator or LRA vibrator that has been implemented on the electronic device 102 as the vibrator 112. Additionally, at a fourth preliminary step, the processing portions 204 (e.g., one or both of the digital processors 234, 236) begin operation in accordance with the software program(s) stored on the memory 206 during the third preliminary step, such that appropriate signals can be provided to the vibrator driver 116 to allow for controlling of the ERM vibrator or LRA vibrator that is implemented on the electronic device as the vibrator 112. Following these preliminary steps, the steps of the flow chart 400 shown in FIG. 4 can then be further performed so as to produce operation of the ERM vibrator or LRA vibrator that has been implemented as the vibrator 112.

Further, at least some of the various functions described above and described herein can be enabled or facilitated using a waveform state machine taught by the Table 2 below. Table 2 particularly shows that various (e.g., N) different vibrator drive waveforms can be preset, each with a different period and/or for a different duration; and in at least some embodiments, each field of the below Table 2 is set prior to enabling the vibrator driver 116 (that is, prior to setting the VIB_EN value discussed above to "1" to start the waveform). Each field can be considered a distinct register of the vibrator driver 116, and can be set in any of a number of manners including, for example, by one or more of the processing portions 204 (e.g., the first or second digital processors 234, 236). For example, one or more of the registers can be set by way of the fourth input terminal 306 (the microcontroller control signal input) by selection of that input (e.g., by appropriate setting of the VIB_IN_SEL value discussed above). In other embodiments, the state machine can be implemented by way of operation of one or more of the processing portions 204, such as an on-chip microcontroller or microprocessor.

**Table 2—Fields/Registers Used For Waveform State Machine**

| Field (or Register) | Number of Bits | Description |
|---|---|---|
| VIBRATOR_LEVEL_0 | 7 | This register sets the output target 0-peak voltage, which is particularly a two's complement number in 91.81 mV steps, for Waveform 0. |
| VIBRATOR PERIOD 0 | 16 | This register sets the period of the Waveform 0, with units in microseconds. The amplitude of Waveform 0 toggles between positive and negative VIBRATOR_LEVEL 0 during VIBRATOR_PERIOD_0 at 50% duty cycle. |
| VIBRATOR_DURATION_0 | 8 | This register sets the duration of the Waveform 0 in 2 millisecond steps ($00 indicates to end the signal). |
| VIBRATOR LEVEL 1 | 7 | This register sets the output target 0-peak voltage, which is particularly a two's complement number in 91.81 mV steps, for Waveform 1. |
| VIBRATOR_PERIOD_1 | 16 | This register sets the period of the Waveform 1, with units in microseconds. The amplitude of Waveform 1 toggles between positive and negative VIBRATOR_LEVEL_1 during VIBRATOR_PERIOD_1 at 50% duty cycle. |
| VIBRATOR_DURATION_1 | 8 | This register sets the duration of the Waveform 1 in millisecond steps ($00 indicates to end the signal). |
| ... | | |
| VIBRATOR LEVEL N | 7 | This register sets the output target 0-peak voltage, which is particularly a two's complement number in 91.81 mV steps, for Waveform N. |
| VIBRATOR PERIOD N | 16 | This register sets the period of the Waveform N, with units in microseconds. The amplitude of Waveform N toggles between positive and negative VIBRATOR_LEVEL_N during VIBRATOR_PERIOD_N at 50% duty cycle. |
| VIBRATOR_DURATION_N | 8 | This register sets the duration of the Waveform N in 2 millisecond steps ($00 indicates to end the signal). |

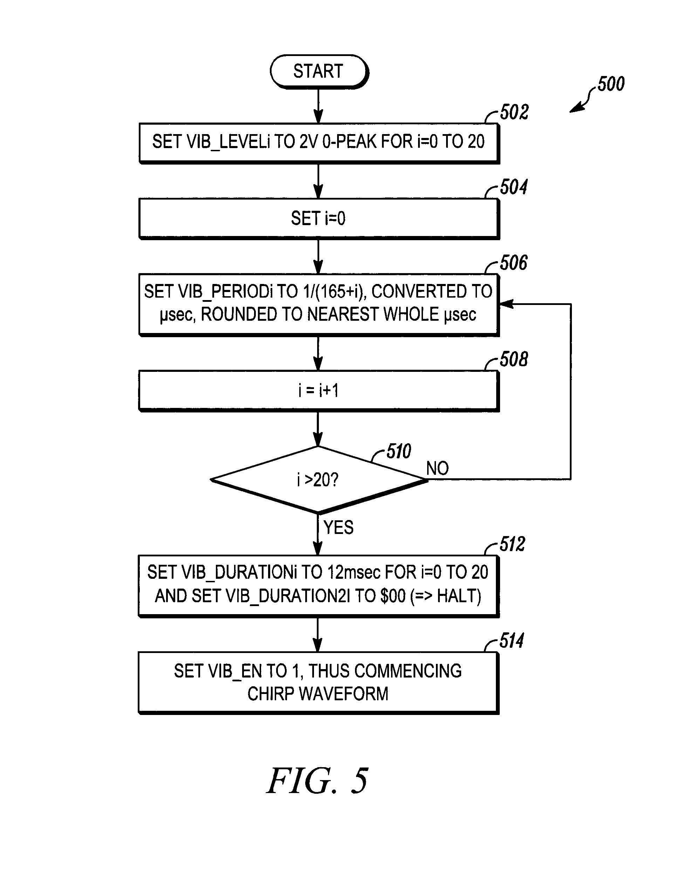

With respect to FIG. 5, steps of an example method for generating a chirp waveform utilizing the benefit of the example waveform state machine of Table 2 to operate the example vibrator driver of FIG. 3 are shown, as represented by a flow chart 500. In this example, it is assumed that N in Table 2 is greater than 20. Upon starting, the method proceeds to a step 502, where the field (or register of the vibrator driver 116) VIBRATOR_LEVELi is set to a voltage for each i = 0 to 20 (this voltage in the present embodiment is a peak-to-peak voltage, albeit in other embodiments it can also be some other type of voltage such as zero-to-peak voltage) by one of the digital processors 234 or 236. By virtue of these settings, the voltage for each of a series of chirp waveform pulses is set. Next, at a step 504, a value i is initially set to zero. Then, at a step 506, the field (or register) VIBRATOR_PERIODi is set to a period equaling 1/(165+i), converted to microseconds and rounded to the nearest whole microsecond. Further, at a step 508, the value of i is incremented by one and then at a step 510, it is determined whether i as incremented exceeds 20. If not, then the steps 506 and 508 are performed again, based upon the incremented value of i and, if so, then the process advances to a step 512. In this manner, due to the initial performing of the step 506, the register VIB_PERIOD0 is set to 1/165, converted to microseconds and rounded to nearest whole microsecond, and additionally further registers VIB_PERIOD1 through VIB_PERIOD20 are also set (e.g., to have values 1/166, 1/167 ... up to 1/185, each converted to microseconds, and rounded to nearest whole microsecond). Thus, the lengths of each of the series of chirp waveform pulses is set.

Upon reaching the step 512, the vibrator driver 116 sets a field (or register of the vibrator driver 116) VIBRATOR_DURATIONi to a duration of time (e.g., 12 milliseconds) for each of i=0 to 20, and also sets a field (or register) VIBRATOR_DURATION_21 to a value that communicates ending the chirp waveform (e.g., $00, which implies waveform halt). Finally, at a step 514, the vibrator driver 116 begins generating (and outputting) the chirp waveform, in this example when a VIB_EN field (or register) is set to the logic value of "1". That is, upon the step 514 occurring, the vibrator driver 116 operates to generate the selected chirp waveform. It does so by sequentially moving through the Table 2 entries that were actually programmed, as described above, and outputting each ith waveform for the amplitude, duration and frequency indicated by the VIBRATOR_LEVEL_i, VIBRATOR_PERIOD_i, and VIBRATOR_DURATION_i values, where i can range from 1 to N.

Notwithstanding the above discussion, it should be appreciated that the above-described values for each of the fields (register) employed in setting and enabling the chirp waveform in accordance with FIG. 5 are merely example values for each parameter; and other values can also be employed in other embodiments or circumstances to set and control the chirp waveform. Further, in some embodiments, a high frequency counter (e.g., running off a 26 MHz clock) can precisely control the period and duration of the chirp waveform. Also, although the above-discussed state machine is intended to be implemented on the vibrator driver 116 as a hardware state machine, in alternate embodiments, a state machine (and thus chirp waveforms and other waveforms produced thereby) can also be implemented (using the same or substantially similar register models) can be produced by an on-chip microcontroller (e.g., a microprocessor), which can also be among the processing portions 204, and/or can be produced through the use of software (e.g., software macros) having appropriate waveform generation programs. Also, although the steps of the flow chart 500 are shown in one order, the steps can be rearranged in their order in at least some other embodiments.

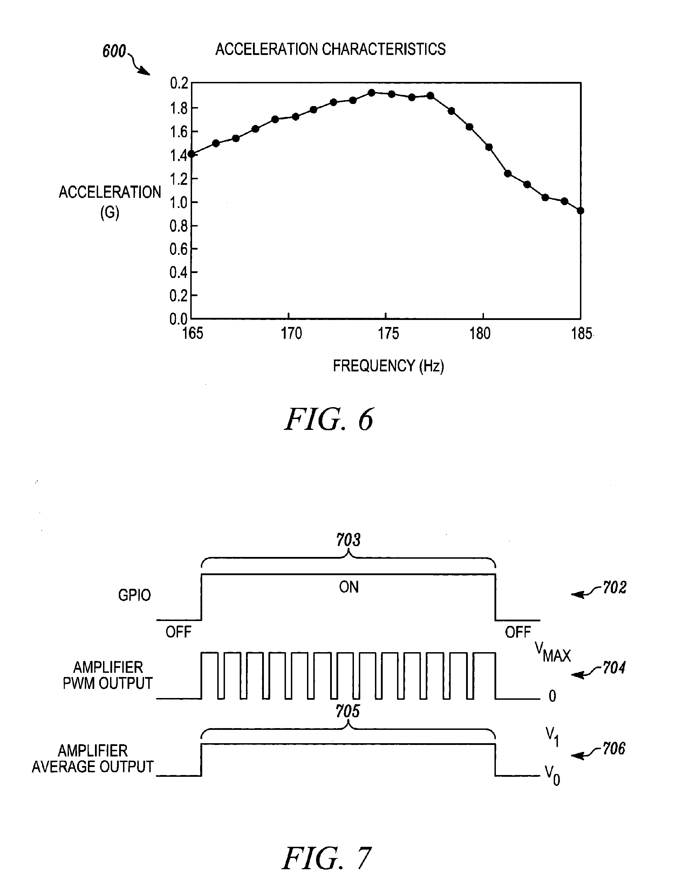

Referring to FIG. 6, a graph 600 is further provided to illustrate an example acceleration versus frequency profile of a LRA vibrator (e.g., the LRA vibrator 114 of FIG. 3) controlled by the vibrator 116 when operating in accordance with the example waveform state machine discussed above. In this example, the resonant frequency of the LRA vibrator 114 is between 165 to 185 Hz, and appropriately therefore the waveform state machine controls the LRA vibrator by generating a chirp waveform ranging from 165 to 185 Hz, in 1 Hz steps, at approximately two cycles per frequency step. Although generating such a waveform could in conventional systems require complex real-time support from either software or other electrical components (even if a PWM generator is available in the respective electronic device) the example waveform state machine of the present embodiment can set the chirp waveform without such complexities (again assuming N > 20).

The disclosure of the vibrator driver 116 up to this point has focused on the components of vibrator driver and the methods performed by the driver without describing in detail the signals received by and generated within or by the vibrator driver 116. The exact signals that can be provided/generated in this regard can vary widely depending upon the embodiment, operational circumstance, and type(s) and numbers of vibrators being actuated by the vibrator driver. Nevertheless, FIGS. 7-10 are provided to show several example sets of signals that can be provided/generated , more particularly, first signals (or waveforms) that are input to the vibrator driver 116, second signals generated by the PWM converter 320, and average output signals experienced at the ERM vibrator 112 and/or LRA vibrator 114 as appropriate. The following paragraphs provide such details, and in particular describe example waveforms for controlling the ERM vibrator 112 and the LRA vibrator 114 as can be achieved in at least some embodiments or circumstances during performing of the step 410 of FIG. 4 (and associated steps 412-426).

With respect to FIG. 7 in particular, primary, secondary and third (tertiary) waveforms 702, 704, and 706 representative of example operation of the vibrator driver 116 to achieve ERM vibrator operation (including on/off actuation) are shown. The primary (top) waveform 702 shows an example control signal from the controller IC to activate the ERM vibrator. This is a simple control signal that activates the ERM for a period of time, then turns off the ERM. While the control signal is 'high', the circuit will generate target voltage V1. When the control signal is low, it will generate target voltage V0 (0V). The secondary (middle) waveform 704 shows an example PWM signal from the vibrator driver, triggered by the above control signal. This PWM signal is a constant duty cycle waveform. The third (tertiary or bottom) waveform 706 shows an average signal level from the vibrator driver, which results in activation of the ERM vibrator. The average signal has a constant voltage level, V1, during the activation period.

More particularly, the primary waveform 702 is depicted that can be inputted into one of the inputs 303-306 (e.g., to one of the GPIOs) for controlling the ERM vibrator 122 (or possibly other rotary vibrators). As depicted, when the primary waveform 702 is high or "on" (e.g., has a value of "1") during a duration 703, the vibrator driver 116 actuates the ERM driver 112; otherwise, the ERM driver is not being actuated to vibrate. More particularly as shown, when the primary waveform 702 is high, the first and second multiplexers 308 and 310 operate so that the second multiplexer outputs the first target voltage V1; otherwise the second multiplexer generates the second target voltage V0 that is typically zero volts. Also depicted is the secondary waveform 704, which is a constant duty cycle waveform having the form of a square wave or a waveform similar to a square wave, and which the amplifier 330 outputs in response to receiving indirectly (via the PWM converter 320) the output from the second multiplexer 310 as a result of the input of the primary waveform 302 to the vibrator driver 116. As already discussed, the output of the PWM converter 320 is provided to the amplifier 330, which amplifies those signals for output at the output terminals 336, 337. Lastly, the third (tertiary) waveform 706 represents an average signal level from the vibrator driver 116, as output by (across) the output terminals 336 and 337 and provided to the ERM vibrator 112. The average signal level during a duration 705 corresponding to the duration 703 is that the first target voltage V1. In view of this discussion, it should be appreciated that both the duty cycle and the amplitude of the waveform 704 influence the waveform 706. Also, the operation of the amplifier 330 often will introduce an additional gain boosting the signal so that the waveform 704 (and the corresponding waveform 706) has a larger amplitude than the output from the PWM converter 320 that is provided to the amplifier 330 for generating that waveform 704 (and the corresponding waveform 706).

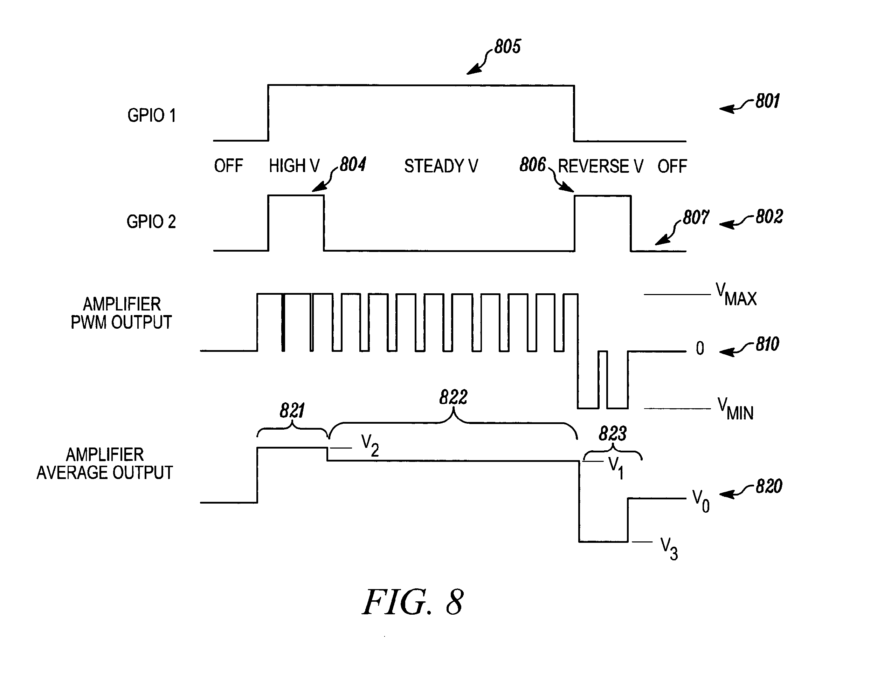

Turning to FIG. 8, two primary waveforms 801 and 802, a secondary waveform 810, and a third (tertiary) waveform 820 are shown that are representative of example operation of the vibrator driver 116 to achieve ERM vibrator operation according to a snap on/snap off pattern. The two primary (top two) waveforms 801 and 802 show example control signals from the controller IC to activate the ERM vibrator. This control signals activate the ERM vibrator with a snap on/off pattern to improve the tactile feel of vibration. The state of control signals from GPIO1 and GPIO2 will determine the circuits output target voltage. In this example, voltage V2 is generated for an accelerated turn on, V1 is generated for a steady state vibration, V3 is generated for an accelerated turn off, and V0 (0V) is generated to turn off the vibration. The secondary (lower middle) waveform 810 shows an example PWM signal from the vibrator driver, triggered by the above control signal. The PWM signal has varying duty cycles, depending on the target voltages being generated. The third (bottom) waveform 820 shows an average signal level from the vibrator driver, which results in activation of the ERM vibrator, followed by de-activation. The average signal has varying voltage levels in order to provide the vibration sequence described above.

More particularly, the two primary waveforms 801 and 802 (differing from the primary waveform 702 of FIG. 7) are now depicted that also can be inputted into two of the inputs 303-306 (e.g., to two of the GPIOs) for controlling the ERM vibrator 122 (or possibly other rotary vibrators). The primary waveforms 801 and 802 particularly are configured to control the ERM vibrator 112 in a manner so that the ERM vibrator has enhanced tactile feedback, first by vibrating in an accelerated manner, then second by vibrating at a steady state, then third by vibrating to achieve a fast deceleration (by applying a reverse voltage to the steady state rotation), and finally by deactivating. More particularly as shown, in the present embodiment, a first acceleration part of the vibration occurs during a first time period when a first voltage pulse portion 804 of one of the primary waveforms 802 has a high or "1" value and a second voltage pulse portion 805 of the other of the primary waveforms 801 also has a high or "1" value, steady state vibration then next occurs during a second time period when the first voltage pulse portion 804 ends (such that the primary waveform 802 returns to a low or "0" value) but the primary waveform 801 remains at the high or "1" value, subsequently deceleration occurs during a third time period when a third voltage pulse portion 806 of the primary waveform 802 occurs (so that the primary waveform 802 has a high value) but at the same time the second voltage pulse portion 805 ends such that the primary waveform 801 returns to a low or "0" level, and finally this is followed by a fourth time period during which deactivation occurs, where both of the primary waveforms 801 and 802 have a low or "0" value (e.g., within a time period corresponding to a portion 807 of the primary waveform 802).

Additionally FIG. 8 also shows a secondary waveform 810 that the amplifier 330 can output, which can result (indirectly via operation for example of the PWM converter 320) from the inputting of the first and second primary waveforms 801 and 802. As shown, the secondary waveform is a square wave of a waveform similar to a square wave having a constant duty cycle during the period of time between the occurrences of the first voltage pulse 804 and second voltage pulse 806, but having a somewhat greater duty cycle during the time of the first voltage pulse 804. Although the secondary waveform 810 oscillates between a positive (Vmax) voltage and zero voltage prior to the third voltage pulse 806, during the time period of the third voltage pulse the secondary waveform instead oscillates between a negative (Vmin) voltage and zero voltage, and upon commencement of the zero voltage region 807 the secondary waveform also takes on a zero voltage.

Further, a third waveform 820 shown in FIG. 8 represents an average signal level from the vibrator driver 116 that represents the average output to the ERM vibrator 112 as provided by the amplifier 330. As shown, during a first period 821 corresponding temporally to the first voltage pulse portion 804, the ERM vibrator 112 vibrates in an accelerated manner, at a voltage level V2. Further, during a second period 822, corresponding to second voltage pulse portion 805 (the time period between the pulse portions 804 and 806), the ERM vibrator 112 vibrates at a steady state, at a voltage level V1 somewhat less than V2 (both V1 and V2 being above a zero voltage V0). Then, during a third period 823 corresponding to the third voltage pulse portion 806, the ERM vibrator 112 vibrates in an accelerated manner again, but in a reversed manner at a voltage V3 that is less than a zero voltage. Finally, at the time when the zero voltage region 807 begins, the third waveform 820 also goes to a zero voltage level (V0) corresponding to deactivation of the ERM vibrator 112. Thus, a respective target voltage can be achieved during each of the periods 821-823, and deactivation at the end of the vibration pattern usually occurs due to a zero voltage outputted by the vibrator driver 116.

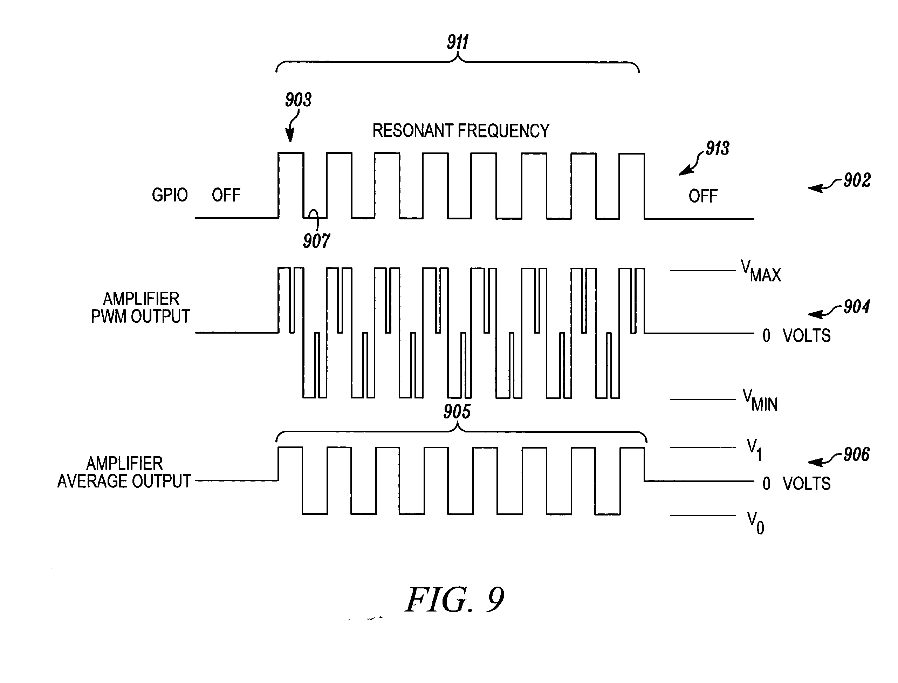

Referring next to FIG. 9, a further primary waveform 902, secondary waveform 904, and third waveform 906 are shown that are representative of example operation of the vibrator driver 116 to achieve LRA vibrator operation involving a particular pattern (fixed frequency). The primary (top) waveform 902 shows an example control signal from the controller IC to activate the LRA vibrator. This control signal activates the LRA vibrator with a fixed frequency corresponding to the resonant frequency of the LRA vibrator. While the control signal is "high", the circuit will generate target voltage V1. When the control signal is low, it will generate target voltage V0. The secondary (middle) waveform 904 shows an example PWM signal from the vibrator driver, triggered by the above control signal. This PWM signal has varying duty cycles to generate the resonant frequency signal. The third (bottom) waveform 906 shows an average signal level from the vibrator driver, which results in activation of the LRA vibrator. The short-time average signal is an AC signal corresponding to the resonant frequency of the LRA vibrator.

More particularly, the further primary waveform 902 that can be inputted into (received at) one of the input terminals 303-306 (e.g., the first input terminal 303) for controlling the LRA vibrator 114 (and/or possibly other linear vibrators) is shown. In this example, the primary waveform 902 causes activation of the LRA vibrator 114 by a fixed frequency signal corresponding to a resonant frequency of the LRA vibrator. As shown, the primary waveform 902 includes a period 911 during which it oscillates between high voltage values 903 and zero voltage values 907, and the subsequently during a period 913 is at a zero voltage (or "OFF") level. In such an embodiment, when the primary waveform 902 is at a high voltage 903, it is intended that the vibrator driver 116 will generate the first target voltage, and when the primary waveform is at a low voltage (e.g., a zero voltage), it is intended that the vibrator driver will generate the second target voltage that is typically the opposite (e.g., negative) of the first target voltage. Further, when the first waveform 902 is at a steady state of zero volts during the period 913, as opposed to varying during the period 911, the vibrator driver 116 deactivates the linear vibrator 344.

Further in this regard, FIG. 9 also depicts the secondary waveform 904 indicative of the signal output by the amplifier 330 , which can result (indirectly via for example the PWM converter 320) from the inputting of the primary waveform 902. As shown, the secondary waveform 904 is a varying duty cycle waveform that represents or includes the resonant frequency of the LRA vibrator 344. The secondary waveform 904 particularly begins and ends at a level of zero (0) volts and, between these ends (that is, during the times when the pulsing of the primary waveform 902 is occurring) the secondary waveform itself includes oscillating pulses above and below zero volts, between a voltage maximum Vmax and a voltage minimum Vmin.

Lastly, the third waveform 906 is also depicted in FIG. 9 that represents an average signal level from the vibrator driver 116 as output by the amplifier 330. During a period 905, which corresponds to the period 911 during which the primary waveform 902 is oscillating between the values 903 and 907 (and that also corresponds to when oscillating pulsing is occurring in the secondary waveform 904), the short term average signal level represented by the third waveform 906 is variable. More particularly, during the period 905, the short term average signal level varies between a nonzero positive voltage V1 and a nonzero negative voltage V0, with the voltage V1 level being attained at times substantially corresponding to the times when the primary waveform 902 is at the high voltage value 903, and with the voltage V0 level being attained at times substantially corresponding to the times when the primary waveform 902 is at the low voltage value 907. Subsequently, at a time corresponding to period 913 (as well as prior to the period 905), the average output is at a zero (0) voltage level (in between V1 and V0) such that the LRA is deactivated.

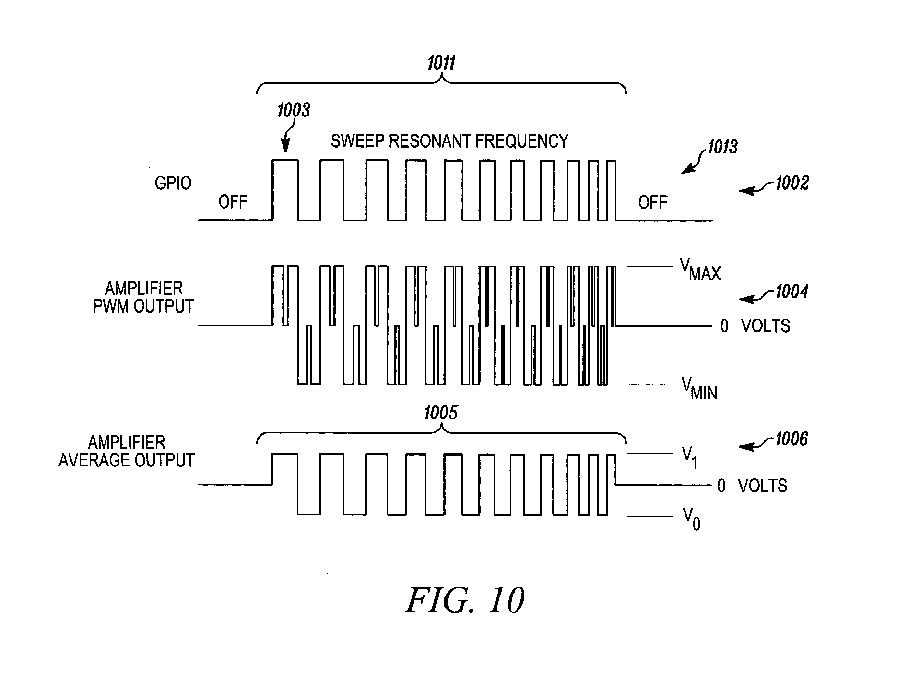

Finally, referring to FIG. 10, additional waveforms are shown that are representative of example operation of the vibrator driver 116 to achieve controlled operation of the LRA vibrator 114 (or other linear vibrators), where the operation is particularly suited for causing the LRA vibrator to be actuated in accordance with a LRA vibrator sweep pattern (e.g., suitable for an LRA vibrator requiring such a sweep). In this example, a primary waveform 1002, secondary waveform 1004 and third (tertiary) waveform 1006 are particularly shown. The primary (top) waveform shows an example control signal from the controller IC to activate the LRA vibrator. This control signal activates the LRA vibrator with a frequency sweep, covering a range of potential resonant frequencies of the LRA vibrator. While the control signal is "high", the circuit will generate target voltage V1. When the control signal is low, it will generate target voltage V0. The secondary (middle) waveform 1004 shows an example PWM signal from the vibrator driver, triggered by the above control signal. This PWM signal has varying duty cycles to generate the resonant frequency sweep. The third (bottom) waveform shows an average signal level from the vibrator driver, which results in activation of the LRA vibrator. The short-time average signal is an AC signal sweep covering a range of potential resonant frequencies of the LRA.

More particularly in this example, the primary waveform 1002 is a chirp waveform that can be inputted into one of the input terminals 303-306 for controlling the LRA 114. As shown, the primary waveform 1002 activates the LRA vibrator 114 by a frequency sweep that covers a range of potential resonant frequencies of the LRA vibrator. That is, during a period 1011 the primary waveform experiences a succession of pulses 1003 of ever decreasing length in time, during which time the LRA vibrator 114 is actuated. In other embodiments, the succession of pulses can take other forms including, for example, a succession of pulses of ever increasing length. In the present embodiment, the frequency sweep is linear, although this also can vary depending upon the embodiment. Further, when the primary waveform 1002 takes on a value of zero volts during a period 1013, deactivation of the LRA vibrator 114 occurs.

Further in this regard, FIG. 10 also shows the secondary waveform 1004 representing the output of the amplifier 330 that occurs in response (indirectly via, for example, the PWM converter 320) to the inputting of the primary waveform 1002. As shown, the secondary waveform 1004 is a varying duty cycle waveform that represents or includes the resonant frequency of the LRA vibrator 334. In the present example, pulses of the waveform 1004 particularly occur during (or substantially at the same as) the pulses 1003 of the primary waveform 1002 occur so as to provide the resonant frequency sweep, albeit this need not be the case in other embodiments. The secondary waveform 1004 particularly begins and ends at a level of zero (0) volts and, between these ends (that is, during the times when the pulsing of the primary waveform 1002 is occurring) the secondary waveform itself includes oscillating pulses above and below zero volts, between a voltage maximum Vmax and a voltage minimum Vmin.

Finally, the third waveform 1006 represents an average signal level from the vibrator driver 116 as output by the amplifier 330. During a period 1005, which corresponds to the period 1011 during which the primary waveform 1002 is oscillating (and that also corresponds to when the oscillating pulsing is occurring the secondary waveform 1004), the short term average signal level represented by the third waveform 1006 is variable. More particularly, during the period 1005, the short term average signal level varies between a nonzero positive voltage (V1) and a nonzero negative voltage (V0), with the voltage V1 level being attained at times substantially corresponding to the times when the pulses 1003 of the primary waveform 1002 are occurring, and with the voltage V0 level being attained at times in between those pulses 1003 (when the primary voltage 1003 is at a zero voltage level). Following the period 1005 (as well as prior to the period 1005), the average output takes on the zero voltage level (in between V1 and V0) such that the LRA vibrator 114 is deactivated.

In view of the above, it should be appreciated that, in at least some embodiments, one or more of a variety of advantages can be achieved by employing systems and methods such as those discussed above. For example, through the implementation of a vibrator driver circuit such as the vibrator driver 116, it is possible to drive either rotary or linear vibrators (or both) using a single driver circuit. Also for example, such a vibrator driver circuit can include appropriate pulse-width-modulated (PWM) generation components/functionality from a microprocessor or other system processing portions to a hardware amplifier circuit (or to a circuit that also contains amplification circuitry), thus simplifying software requirements for other processing portions. Additionally for example, operation can be achieved by providing signal(s) merely to standard GPIO terminals, allowing for basic GPIO control, a capability supported by (and/or otherwise consistent with) many if not most digital integrated circuits.

Also for example, in at least some embodiments, programmable target voltages are employed by the vibrator driver circuit that support many vibration drive features in a simple manner. Driving vibrator(s) by way of multiple waveforms and sequences thus becomes a simple matter of selecting desired target voltages over time. Further for example, in at least some embodiments the incorporation of a timeout mechanism in the vibration driver circuit allows for avoiding of the actuation of vibrator(s) for excessively-long periods of time, and correspondingly thus avoid any overvoltage condition in the hardware amplifier that might accompany such actuation, and this can be accomplished without relying upon software control or external filtering components. Additionally, in at least some embodiments, a state machine can be employed by which generation of a multiplicity of vibrator driver levels (each with a programmable duration, after which actuation/operation ceases) can be accomplished. Such a state machine can be used to generate quick start higher amplitude waveforms followed by a final steady state value, and/or to generate a full chirp waveform commonly utilized by linear vibrators. Also, in at least some embodiments, the vibration driver circuit that is used can be coupled to an on-chip microcontroller that controls input waveform logic 0 and 1 levels that are provided to the vibrator driver circuit and, as a consequence, makes it possible for the vibration driver circuit to generate a waveform that is in accordance with a programmable waveform programmed at the microcontroller.

It is specifically intended that the present invention not be limited to the embodiments and illustrations contained herein, but include modified forms of those embodiments, including portions of the embodiments and combinations of elements of different embodiments as come within the scope of the following claims.

## Claims

1. A system for driving a vibrator in an electronic device, the system comprising:
an integrated circuit having:
one or more input terminals;
one or more output terminals by which the integrated circuit is configured to be coupled to the vibrator;
a discrete-level converter circuit;
a vibrator driver amplifier circuit coupled at least indirectly between the discrete-level converter circuit and the one or more output terminals; and
one or more further circuit components coupled at least indirectly between
the one or more input terminals and the discrete-level converter circuit; and
at least one processing portion for providing one or more input signals to the one or more of the input terminals of the integrated circuit,
wherein the integrated circuit is configured to provide one or more control signals via the one or more output terminals for receipt by the vibrator, based at least in part upon the one or more input signals, and
wherein the system is configurable such that the one or more control signals to be provided will include one or more first signals if the vibrator is a first vibrator device of a first type, and such that the one or more control signals to be provided include one or more second signals if the vibrator is a second vibrator device of a second type that is different from the first type.

2. The system of claim 1 wherein, based upon a configuration of the system, the one or more control signals to be provided by the integrated circuit can include any of a plurality of different waveforms that are respectively suitable for driving any of a plurality of different types of vibrator devices including the first type of vibrator device and the second type of vibrator device.

3. The system of claim 1, wherein the first vibrator device is a rotary vibrator, and the second vibrator device is a linear vibrator.

4. The system of claim 3, wherein the rotary vibrator is an eccentric rotary motor (ERM) vibrator and the linear vibrator is a linear resonant actuator (LRA) vibrator.

5. The system of claim 1, wherein the one or more additional circuit components include a multiplexer circuit having a plurality of input ports,
wherein the multiplexer circuit is coupled at least indirectly to the one or more input terminals so as to receive the one or more input signals or at least one further signal based at least in part upon the one or more input signals,
wherein the multiplexer circuit is further configured to provide an output signal based at least indirectly upon additional signals received at the input ports in accordance with selections indicated by the received one or more input signals or at least one further signal, and
wherein the multiplexer circuit is coupled to the discrete-level converter circuit so that the output signal is provided to the discrete-level converter circuit.

6. The system of claim 5, wherein the multiplexer circuit is a first multiplexer circuit, the one or more additional circuit components include a second multiplexer circuit having a plurality of further input ports that respectively constitute, or are at least indirectly coupled to, the one or more input terminals, respectively, and wherein the first multiplexer circuit is configured to provide the at least one further signal, the at least one further signal being based at least indirectly upon a first subset of the input signals received at a first selected subset of the first input terminals.

7. The system of claim 6, wherein the discrete-level converter circuit is a pulse-width modulation (PWM) circuit, and wherein each of the input terminals is a general purpose input output (GPIO) terminal.

8. The system of claim 1, wherein the integrated circuit has a plurality of registers for storing a plurality of values, including a first register in which is stored a timeout period, such that the integrated circuit is configured to provide the one or more control signals so as to drive the at least one vibrator only for a duration of time equaling the time period following commencement of a driving of the at least one vibrator.

9. The system of claim 1, wherein the at least one processing portion includes an on-chip microcontroller that is configured to provide the one or more input signals to the integrated circuit, wherein the one or more input signals represent an input waveform encompassing a plurality of waveform portions having logic zero and logic one levels, whereby the one or more control signals correspond to a programmable waveform, the input waveform constituting or being based at least indirectly upon the programmable waveform.

10. The system of claim 9, wherein one or both of the at least one processing portion and the integrated circuit includes a state machine implemented thereupon, and wherein the control signals are determined at least in part based upon operation of the state machine.

11. An electronic device comprising:
a vibrator selected from the group consisting of a rotary vibrator and a linear vibrator;
a plurality of processing portions including:
an integrated circuit having:
one or more input terminals;
one or more output terminals by which the integrated circuit is at least indirectly coupled to the vibrator;
a pulse-width modulation (PWM) circuit;
an amplifier circuit coupled at least indirectly between the PWM circuit and the one or more output terminals; and
one or more additional circuit components coupled at least indirectly between the one or more input terminals and the PWM circuit; and
at least one further processing portion for providing one or more input
signals to the one or more of the input terminals of the integrated circuit,
wherein the plurality of processing portions and the integrated circuit are configurable so as to enable the integrated circuit to provide either a first set of control signals or a second set of control signals via the one or more output terminals for receipt by the vibrator, the first set of control signals being suitable for driving the vibrator if the vibrator is the rotary vibrator and the second set of control signals being suitable for driving the vibrator if the vibrator is the linear vibrator.

12. The electronic device of claim 11, wherein the electronic device is a mobile device.

13. The electronic device of claim 11, wherein the integrated circuit includes a plurality of registers for storing a plurality of values, wherein the one or more additional circuit components include a multiplexer circuit, wherein the at least one further processing portion includes a microprocessor, and wherein the one or more input terminals include a plurality of general purpose input output (GPIO) terminals.

14. The electronic device of claim 13, wherein the integrated circuit is configured to provide a timeout mechanism to avoid actuations of the at least one vibrator that are excessively long in duration.

15. The electronic device of claim 11, wherein the vibrator is the rotary vibrator and further comprising an additional vibrator that is the linear vibrator, and additionally comprising a multiplexer-type circuit that allows for selective coupling of the one or more output terminals to each of the rotary vibrator and the linear vibrator at different respective times.

16. A method of controlling operation of a vibrator in an electronic device, the method comprising:
providing an integrated circuit within the electronic device that includes a pulse-width modulation (PWM) circuit coupled to an amplifier circuit;
determining whether the vibrator is of a first type or of a second type;
receiving an input signal at the integrated circuit;
providing an intermediate signal to the PWM circuit, the intermediate signal including a series of high value sections alternating with low value sections, the alternating depending at least indirectly upon the received input signal;
producing a PWM signal at the PWM circuit based at least in part upon the intermediate signal;
amplifying the PWM signal at the amplifier circuit to produce an amplified signal;
outputting a control signal that either is the amplified signal or is based at least indirectly upon the amplified signal, for receipt by the vibrator,
whereby the controlling of the operation of the vibrator is achieved, and the controlling is particularly suited to reflect whether the vibrator is of the first type or the second type.

17. The method of claim 16, further comprising:
receiving at the integrated circuit a first signal by which a primary register value is set,
and
providing a selector signal corresponding to the primary register value to a multiplexer circuit of the electronic device,
wherein the multiplexer circuit upon receiving the selector signal operates to determine that the intermediate signal is based at least partly upon the input signal rather than based upon one or more alternate input signals.

18. The method of claim 17, further comprising:
receiving at the integrated circuit at least two additional signals by which first and second secondary register values are set, the first and second secondary register values determining high values and low values respectively of the high value sections and low value sections of the intermediate signal, and wherein the alternating between the high value sections and the low value sections depends at least in part upon the input signal.

19. The method of claim 18, further comprising:
wherein a manner of operation of the integrated circuit depends at least in part upon whether the vibrator for which the operation is controlled is of the first type or the second type, the first type being that of a rotary vibrator and the second type being that of a linear vibrator, and
wherein, when the vibrator for which the operation is controlled is of the second type, the input signal received by the integrated circuit toggles repeatedly between a high value and a low value.

20. The method of claim 16, further comprising:
determining that a period of time of actuation of the at least one vibrator has elapsed and, upon the determining being made, modifying the control signal so that the actuation of the at least one vibrator ceases.
